# EUROPEAN PATENT SPECIFICATION

(11) **EP 2 510 212 B1**
(45) Date of publication and mention of the grant of the patent: **19.11.2014**
(21) Application number: 10809059.8
(22) Date of filing: 10.12.2010
(51) Int. Cl.: G01K 13/02, G01K 1/08, F02D 41/14, G01L 19/00

(54) **INTEGRATED SENSOR FOR HUMIDITY, TEMPERATURE AND PRESSURE IN EXHAUST GAS**
INTEGRIERTER SENSOR FÜR FEUCHTIGKEIT, TEMPERATUR UND DRUCK BEI ABGASEN
CAPTEUR INTÉGRÉ D'HUMIDITÉ, DE TEMPÉRATURE ET DE PRESSION DES GAZ D'ÉCHAPPEMENT

(30) Priority: 10.12.2009 IT TO20090972
(43) Date of publication of application: 17.10.2012
(73) Proprietor: Eltek S.p.A., 15033 Casale Monferrato (AL) (IT)
(72) Inventor: CANTARELLI, Domenico, I-15040 Pecetto di Valenza (Alessandria) (IT); CHIESA, Enrico, I-15039 Ozzano (Alessandria) (IT); COLOMBO, Paolo, I-15121 Alessandria (IT)
(74) Representative: Gallarotti, Franco
(86) International application number: PCT/IB2010/055724
(87) International publication number: WO 2011/070535

(56) References cited:
- DE-A1-102005 048 486
- US-A1- 2009 288 484
- US-B1- 7 243 541

## Description

### Field of the invention

The present invention refers to a detection device for systems for treating internal combustion engines exhaust gases, comprising at least humidity sensor means. The device according to the invention finds preferred application in combination with systems of the SCR type and/or for reducing the nitrogen oxides (NOx) and/or particulate (PM) emissions, particularly in motor vehicles with diesel engines having cubic capacity greater than 3500 cc.

### Prior art

The operation of a system for the treatment or post-treatment of the internal combustion engines exhaust gases is typically managed according to the measurement of a characteristic quantity, such as the concentration of ammonia (NH₃) or nitrogen oxides (NH₃) of the exhaust gas. The value of this quantity, detected through a dedicated sensor, may be considerably influenced by the humidity of the exhaust gases, and thus a device adapted to detect the humidity of the gas is provided for in order to correctly interpret the measurements carried out by the abovementioned dedicated sensor.

The humidity detection devices according to the prior art are generally complex and expensive to make and they are often poor from a reliability point of view, where the detections carried out are scarcely accurate, even due to deposits or dirt.

DE 10 2005 048486 A1 discloses a sensor for measuring and controlling pressure, temperature and relative humidity of a gas process stream for hydrogen fuel cell systems, for use in automotive vehicle powertrains. The sensor may be used also in powertrain systems that include an internal combustion engine or a gas turbine engine, wherein mass air flow must be measured and as one of the engine control variables.

### Summary of the invention

In general terms, the present invention aims at providing a detection device of the previously indicated type, for a system or device for the treatment or post-treatment of exhaust gases, having increased accuracy and reliable operation over time.

A further aim of the invention is that of providing one such device having increased functionalities with respect to the detection devices according to the prior art, particularly with the aim of increasing the operating efficiency of the treatment system.

Another aim of the invention is that of providing one such device being inexpensive and compact to manufacture, and whose assembly can be possibly carried out at least partly in an automated manner, without the risk of damaging the delicate components of the device.

Another aim of the invention is that of indicating an exhaust gas treatment system and a corresponding control method wherein the above said detection device finds a particularly advantageous application.

One or more of these objects are obtained, according to the present invention, by a detection device having the characteristics of the attached claims, which form an integral part of the technical disclosure provided herein in relation to the invention.

In summary, according to the invention, a detection device of the type indicated at the beginning has a casing housing a circuit arrangement including humidity sensor means, for example for measuring the relative humidity of a gas, which circuit arrangement further comprises temperature sensor means and pressure sensor means, for detecting a gas temperature value and a gas pressure value, respectively. Preferably, the value obtained through the temperature sensor means can be advantageously used for compensating the humidity value detected through the humidity sensor means, upon the variation of the temperature, in particular with the aim of obtaining a precise relative humidity value and so as to guarantee an efficient and correct operation of the treatment system. It should be considered, for example, that when a vehicle enters into a tunnel there may be a rapid temperature variation, within a few tens of a second, from the external temperature of 30°C and low relative humidity, to a temperature within the tunnel of 12°C and high relative humidity; this has a considerable impact on the temperature and the relative humidity of the exhaust gases, and thus also on the operating accuracy of the treatment system.

For example, the value obtained through the pressure sensor means can be used, besides for correctly estimating the relative humidity value (which can also depend on the pressure of the gas), even for deducing the degree of efficiency of an air filter i.e. clogging degree thereof, which can have a considerable impact of the post-treatment system in its entirety.

In a preferred embodiment, the pressure sensor means are housed in a first chamber of the casing while the humidity sensor means and the temperature sensor means are housed in a second chamber of the casing. In this manner, the position of the sensor means is optimized depending on the type of detections to be carried out, as clarified hereinafter.

In an embodiment, the second chamber is defined in a body of the casing having at least one passage which places the second chamber in communication with the outer environment, and the device comprises protection means, prearranged for shielding the first passage, the protection means comprising a shielding element configured for deflecting the trajectory of possible solid or liquid particles present in the fluid; preferably the shielding element operates substantially in front of the first passage, spaced therefrom. In this manner, though allowing the fluid to penetrate into the second chamber, possible particles present in the fluid cannot reach the passage.

In an embodiment, a body of the casing has a first passage which places the second chamber in communication with the environment in which the fluid subject to measurement is found and a second passage which places the first chamber in communication with such environment. Preferably the first passage has an inlet formed in the abovementioned body at a position that is spaced apart with respect to an inlet of the second passage, the first passage communicating only with the second chamber and the second passage communicating only with the first chamber. This configuration advantageously allows carrying out detections at different points of the environment or pipe in which the device is mounted, for example pressure detections at one point and temperature and/or humidity detections at another point. The configuration in question also allows facilitating the operations of producing the body or casing of the device, for example through simpler moulding operations.

In an embodiment the humidity sensor means and the temperature sensor means are mounted on a circuit support that has at least one slit and at least one of the humidity sensor means and the temperature sensor means is bridge-mounted on the slit. In this manner, the sensor means in question are optimally exposed to the fluid, without the corresponding positioning means (herein constituted by the second circuit support) influencing the detection quality and accuracy in any manner whatsoever. In this embodiment, preferably, the passage which places the measurement environment in communication with the second chamber includes a first and a second aperture, substantially coaxial or aligned and formed at opposite walls of the second chamber, with the region of the second circuit support in which the slit is formed that extends between the first and the second aperture, substantially orthogonal thereto. In this manner, the fluid temperature and/or humidity detection accuracy can be increased further.

In an embodiment the pressure sensor means are mounted on a first circuit support housed in the first chamber, the humidity sensor means and the temperature sensor means are mounted on a second circuit support housed in the second chamber. This solution considerably simplifies the step of producing the device. The two circuit supports can be prearranged separately, with the mounting of the corresponding components, for example with the surface mounting or SMD technique, i.e. in an easily automatable manner.

Preferably the first and the second circuit support are planar and positioned in the first and in the second chamber according to respective lying planes substantially orthogonal with respect to each other, with the two circuit supports being connected through interconnection terminals, preferably rigid, the first and the second chamber being insulated with respect to each other by at least one seal member traversed in a substantially axial direction by at least one intermediate portion of the interconnection terminals.

In this manner also the connection of the two circuit supports can be easily automated. The circuit arrangement thereof can be mounted in a simple manner, also through an easily automatable operation within the casing of the detection device, preferably without requiring specific positioning and/or support means for the various sensor means.

In an embodiment, a spacer member, having a body traversed in an axial direction by a respective portion of the interconnection terminals, is further provided for between the seal member and the first circuit support; preferably the spacer member is secured to the first circuit support. In an embodiment, the abovementioned spacer member is made alongside the seal member, i.e. it constitutes a part thereof. The presence of the spacer element allows providing a support to the first circuit support, in such a manner that, during the insertion of the seal element into a respective housing seat inside the casing of the device, the element does not slide on the interconnection terminals, thus allowing the same to be fully pressed and positioned correctly in the seat thereof. Actually, in such assembly step the terminals are preferably previously welded to the first circuit support, with the seal element mounted.

In an embodiment, the first circuit support has a through hole, the pressure sensor means are mounted on a first face of the first circuit support at the said through hole and on said face of the first circuit support a tubular protection body is secured, surrounding the pressure sensor means; preferably, within the protection body there is a material for protecting the pressure sensor means, such as a gel. In this manner the pressure sensor means, inherently delicate, are protected both against inadvertent impacts, which may occur during the manipulation of the circuit support, for example during the assembly of the device and against risks of possible chemical attack.

Furthermore, in this embodiment the casing of the device comprises preferably a closing body of the first chamber which has, on a face thereof, a protruding tubular element, within which the protection body of the pressure sensor means is at least partly inserted; operative seal means are preferably operative between the tubular element and the protection body and the closing body has a through hole at the tubular element. In this manner, the pressure sensor means may be provided with a reference pressure, which however does not regard the first chamber in its entirety, but only the region surrounded by the protection body and by the tubular element of the closing body. The protection body and the tubular element also meet the functions of positioning the first circuit support within the first chamber, with the seal means interposed between them which allow a kind of elastic mounting of the first circuit support.

Preferably one or more of the passages of the casing of the device, through which a fluid can reach the first and/or the second chamber has/have, at an end thereof, an air/humidity permeable and water impermeable membrane. This allows preventing the risk that possible condensate reaches inside the device, where the circuit components are mounted.

Preferably, the device has a connector comprising connection terminals each having a first portion that extends within the first chamber and a second portion that extends outside the first chamber, wherein the first portion of each terminal defines at least one rest surface from which a terminal end having a restricted cross-section branches off, particularly having a generally sharpened shape, which axially extends according to a direction at least approximately perpendicular to the lying plane of the first circuit support, wherein the ends having restricted section of the terminals are inserted within respective holes present in a first region of the first circuit support, with the latter lying on the rest surfaces, and wherein the casing defines, within the first cavity, positioning means for the first circuit support in a second region thereof. Besides simplifying the construction of the casing and of the abovementioned connector, this type of embodiment allows exploiting the connection terminals of the device as positioning means of the first circuit support within the first chamber.

The device according to the invention finds a preferred application in combination with an exhaust gases treatment system of the SCR type for reducing nitrogen oxides and particulate emissions of an internal combustion engine, particularly a diesel engine having a cubic capacity greater than 3500 cc. Preferably, in such application, the SCR system includes a catalyst device, operatively set along a pipe of the exhaust gases of the engine, and a sensor mounted on the said pipe downstream of the catalyst device, for the detection of the presence of one of ammonia and nitrogen oxides in the exhaust gases. As mentioned, the detection carried out through the humidity sensor means of the detection device is used by a control unit for adjusting, together with the detection carried out by said sensor of the SCR system, the amount of a liquid reducing agent injected into the exhaust gases upstream of the catalyst device. On the other hand, the gas temperature value obtained can be used for compensating the detected humidity value through the humidity sensor means, preferably for obtaining the relative humidity value, while the pressure value can be used, besides for calculating the humidity, for deducing the clogging degree of an air filter found upstream of the post-treatment system.

### Brief description of the drawings

Further objects, characteristics and advantages of the present invention shall be clear from the detailed description that follows and from the attached drawings, purely provided by way of non-limiting example, wherein:
- figure 1 is a perspective view of a detection device according to a first embodiment of the invention;
- figure 2 is an exploded view of the device of figure 1;
- figures 3, 4 and 5 are a front elevational view, a bottom view and a plan view, respectively, of the device of figure 1;
- figures 6, 7 and 8 are sectional views according to lines VI-VI, VII-VII and VIII-VIII of figures 3, 4 and 5, respectively;
- figures 9 and 10 are exploded perspective views of parts of the device of figure 1;
- figure 11 is a perspective view of a first part of a casing of the device of figure 1;
- figure 12 is an exploded view of a second part of the casing of the device of figure 1;
- figures 13 and 14 are exploded perspective views, from different angles, of a circuit arrangement of the device of figure 1;
- figure 15 is a sectional view similar to that of figure 6, of a device according to a second embodiment of the invention;
- figure 16 is a simplified block diagram of an advantageous embodiment of a detection device according to the invention;
- figure 17 is a perspective view of a detection device according to a third embodiment of the invention;
- figures 18 and 19 are two views, respectively in side and front elevation of a portion of the device of figure 18;
- figures 20 and 21 are perspective views of a portion of the device of figure 18, respectively without and with a protection element;
- figure 22 is a schematic section according to line XXII-XXII of figure 19, and
- figure 23 is a section similar to that of figure 22, aimed at illustrating the operation of the protection element of figure 21.

### Detailed description of preferred embodiments of the invention

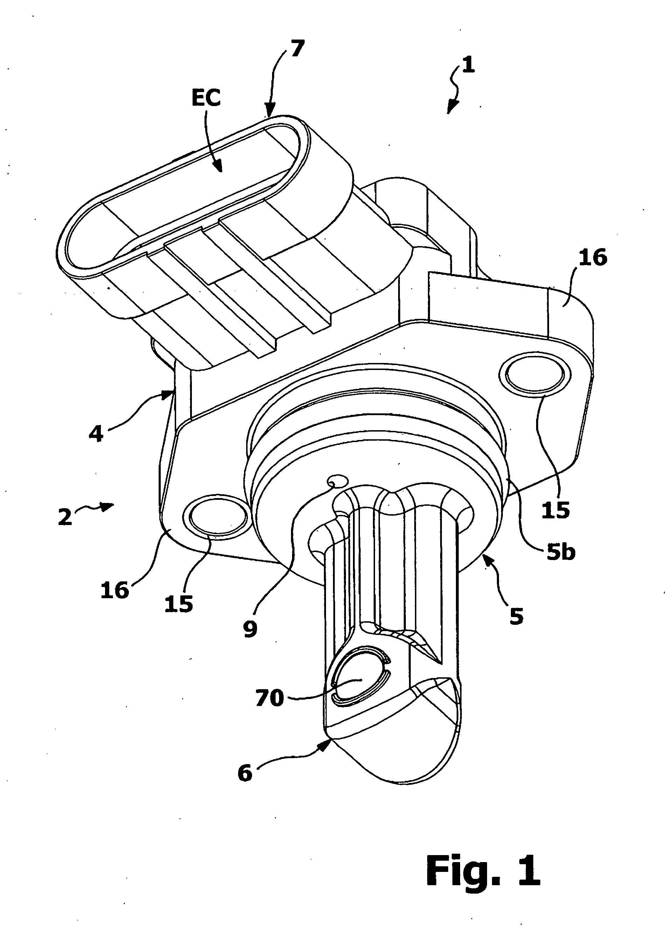

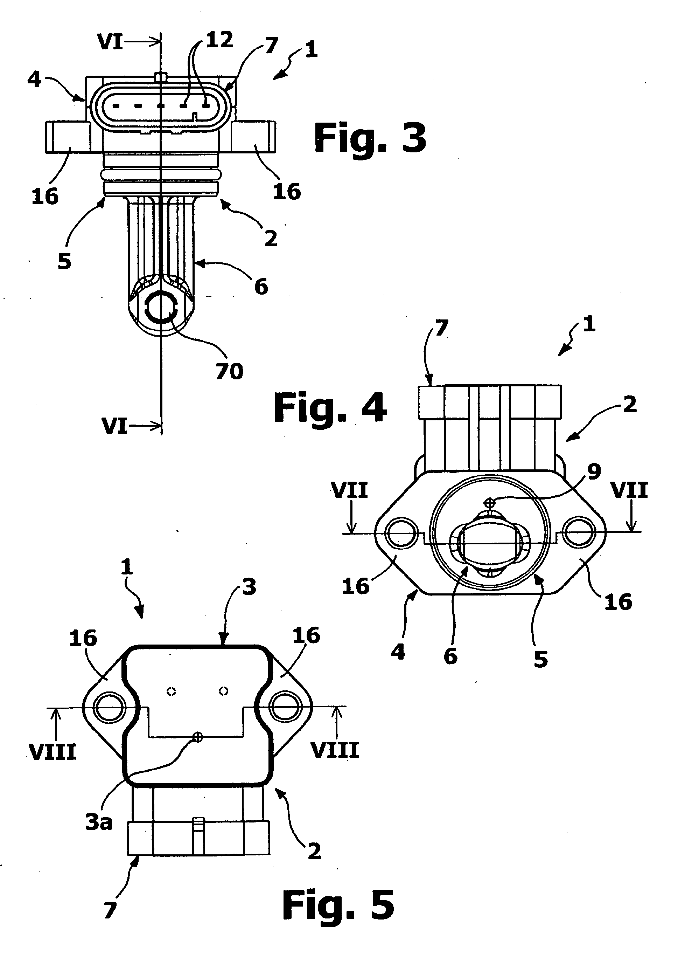

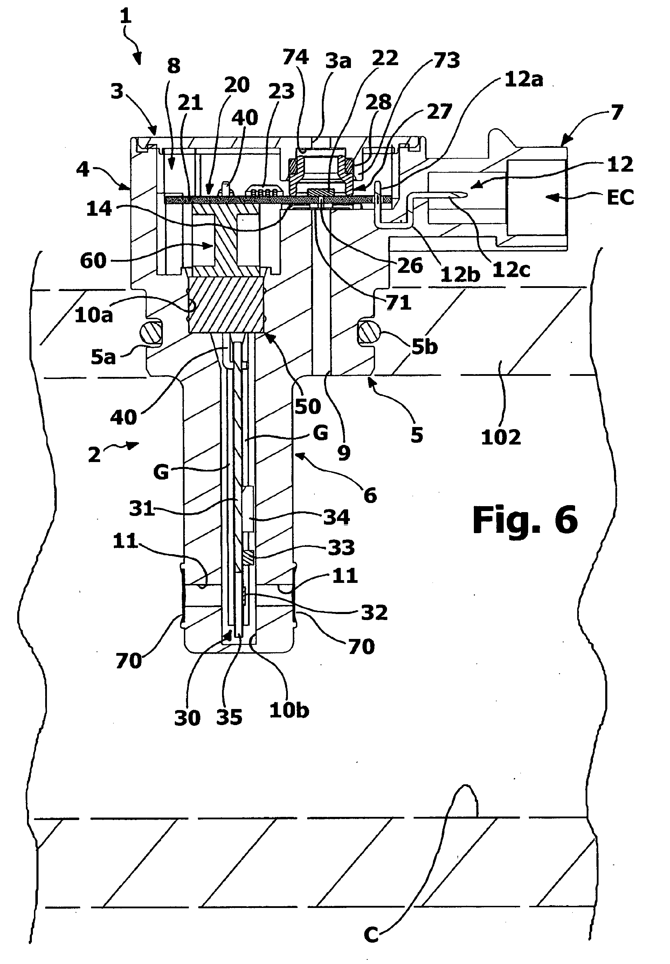

With particular reference to figures 1-5, a detection device according to the invention is indicated in its entirety with 1, in whose structure two main parts can be identified, whose bodies are indicated with 2 and 3: the body 2 essentially meets housing/support, fluidic connection and electrical connection functions, while the body 3 essentially meets the cover functions. The bodies 2 and 3 are mutually coupled, preferably sealingly, to obtain a casing for internal components of the device 1, described hereinafter, as observable for example in figures 6-8. In an embodiment, the bodies 2 and 3 are formed using a relatively rigid material, such as a thermoplastic material, and are preferably made at least in part through a moulding process.

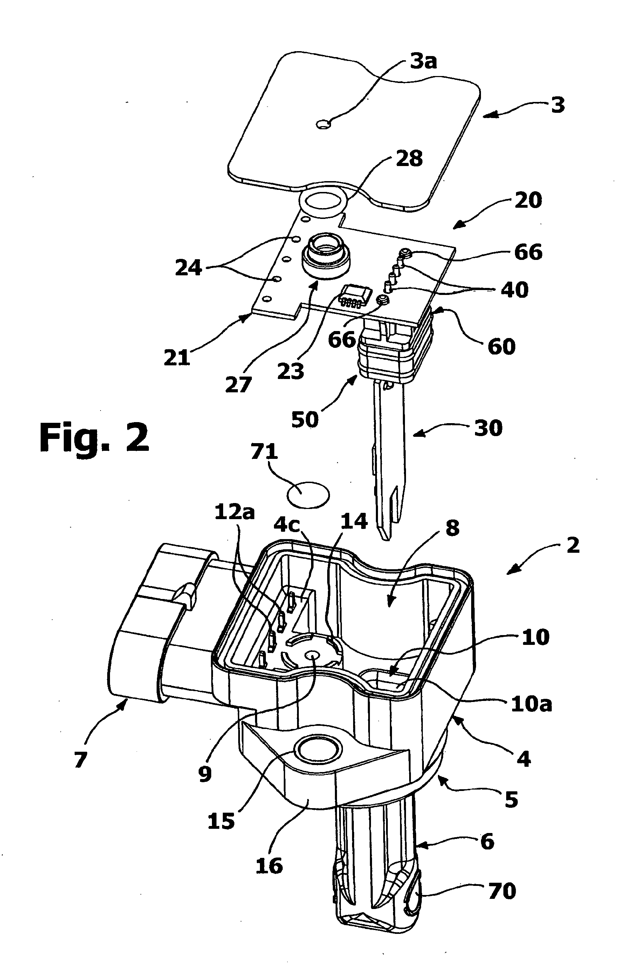

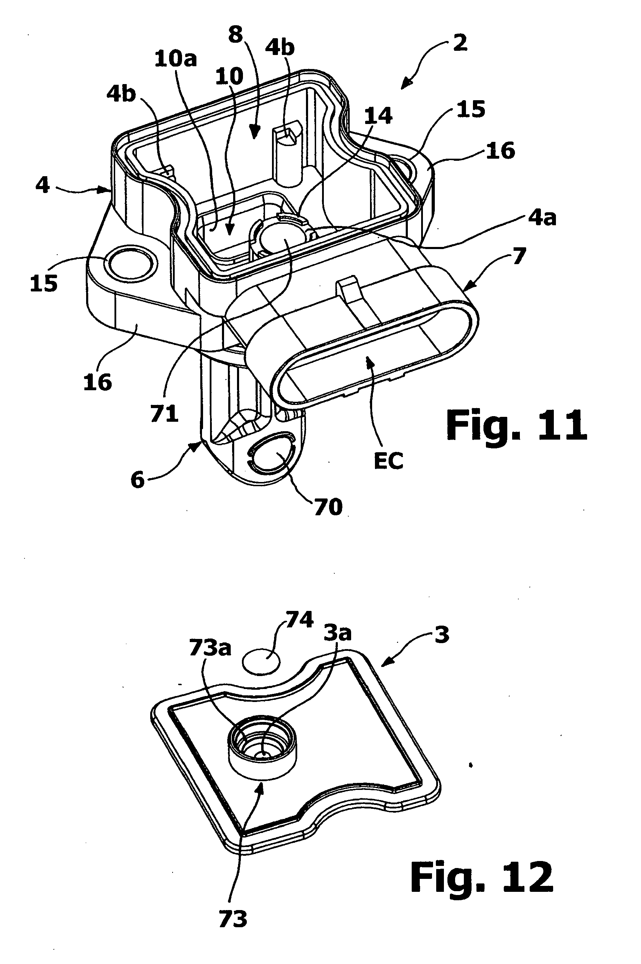

In an embodiment, the body 2 has an upper portion 4, an intermediate portion 5, a lower portion 6 and a lateral portion 7 essentially tubular. As observable particularly in figures 2, 9 and 11, a first cavity or chamber 8, beneath which the intermediate portion 5 is located, is defined in the upper portion 4. The portion 5 has preferably a shape at least approximately cylindrical and defines a seat 5a (figures 6-9) for a radial sealing means, represented for example by an o-ring gasket indicated with 5b. The portion 5 is axially traversed both by a duct 9 (see for example figure 6), which provides an inlet or pressure port and by a respective portion of a second cavity or chamber, indicated in its entirety 10 only in figures 2 and 11, which proceeds axially within the lower portion 6. Preferably, the body in which the duct 9 is defined is configured in such a manner that, in the assembled or operative condition of the device 1, the duct e is arranged substantially orthogonal with respect to the direction of flow of the fluid subject of detection. As observable, in the exemplified embodiment, the duct 9 serving as a pressure port is internally formed in the body 2 of the device 1, without requiring providing for additional pipes. The body 2, including the duct 9 and the chambers 8 and 10 in the described advantageous configurations, can be obtained through moulding, particularly injection moulding of thermoplastic material.

The intermediate portion 5 is intended to be sealingly fitted into a respective seat formed in a pipe in which there is the fluid whose pressure, temperature and humidity - in particular the relative humidity - is to be detected, for example the air delivery pipe of an internal combustion engine, in such a manner that the duct 9 is in fluid communication with the inside of such pipe. Through such mounting, also the lower portion 6 of the casing extends within the abovementioned pipe: as observable hereinafter, the means intended for detecting the temperature and humidity of the fluid are housed within the lower portion 6 of the body 2.

The chamber 10, which has an upper part and a lower part, respectively indicated with 10a and 10b in figures 2, 6-9 and 11, extends in an axial direction within the portions 5 and 6. In a preferred embodiment, the two chamber parts 10a and 10b have different transverse sections: in the illustrated example, the two chamber parts have substantially rectangular sections, but the part 10a has larger sectional dimensions with respect to the part 10b.

The chamber part 10a opens on the chamber 8, as observable for example in figures 2 and 11, while the chamber part 10b is closed at the lower end of the lower portion 6 of the body 2, as observable in figure 6. In proximity to the lower end thereof, in the vertical part of the portion 6 there is at least one passage 11 (figure 6), preferably two passages 11 at substantially opposite diametrical positions, for placing the inside of the chamber part 10b in communication with the external, or with the inside of the pipe in which the fluid subjected to detection is found. The passages 11, preferably substantially coaxial with respect to each other and orthogonal to an axial direction of the cavity 10, constitute a port for detecting the temperature and humidity of the fluid, as described hereinafter.

Preferably, the portion 5 is dimensioned such that, in the mounted condition, the lower face thereof, in which the duct 9 opens, is at a position relatively close or substantially flush with respect to the internal surface of the pipe, and however closest thereto with respect to the passages 11 (see for example figure 6). The portion 6 is preferably dimensioned in such a manner that the passages 11 are substantially at the centre of the pipe, or however at a centremost position.

The device 1 includes a circuit arrangement having an electric connector. In a preferred embodiment, the abovementioned circuit arrangement comprises two distinct electronic circuits or printed circuit boards or PCB. As observable for example in figure 2, in the exemplified preferred embodiment, such two circuits, indicated with 20 and 30, are arranged substantially orthogonal with respect to each other and intended to be housed one in the chamber 8 and the other in the chamber part 10b (see for example figure 6). The two circuits 20 and 30 are electrically connected through interconnection terminals 40 made of electrically conductive material, for example a metal or a metal alloy. In the illustrated example, the terminals 40 have a circular transverse section, but they could also be shaped differently, for example generally flat-shaped. Preferably the body of the terminals 40 is relatively rigid; very preferably, the abovementioned body of the terminals 40 is relatively rigid in the axial direction, simultaneously relatively flexible in a direction transverse to the axis thereof.

The abovementioned electric connector, indicated in its entirety with EC only in figures 1, 6 and 11, comprises the tubular part 7 of the body 2, preferably substantially radial with respect to the cavity 8, into which the connection terminals extend at least partly, for the electric connection of the device 1. The fact that, in an embodiment, the connector EC is at a radial position, allows having the upper part of the body 2 free, both with the aim of facilitating the moulding of the chambers 8 and 10 (and of the duct 9), with opening of considerable parts of the mould (such as carriages or inserts with side apertures) preferably in only one direction and with the aim of allowing mounting the circuit arrangement from only one side.

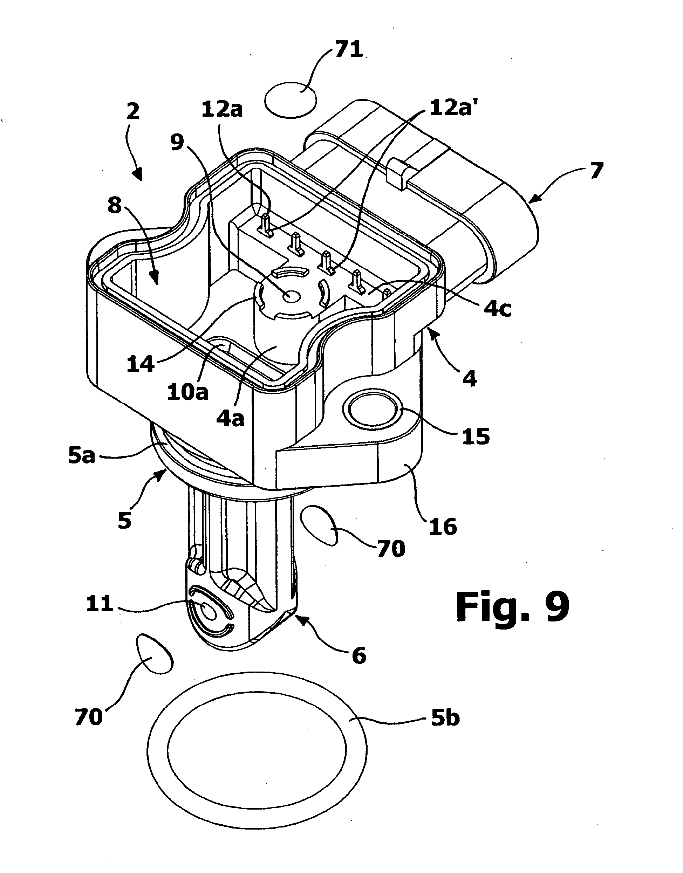

One of the abovementioned terminals is indicated with 12 in figure 6. The terminals 12 are preferably flat-shaped and they are shaped in such a manner to have a connection end 12a (see for example figures 2 and 9) having a smaller and preferably generally sharp-pointed section, an intermediate portion 12b with multiple folds (figure 6) and a substantially straight terminal portion 12c (figure 6). Also the terminals 12 are formed using an electrically conductive material, for example a metal such as copper, or an alloy, in particular a material adapted to be welded.

In the illustrated example the material forming the body 2 is a synthetic material, particularly a thermoplastic material, which is over-moulded to the terminals 12, the latter being for example obtained through a blanking process from a metal strip and/or a deformation or moulding process and/or a mechanical machining or turning operation. In an alternative embodiment the terminals 12 are sealingly mounted in the body 2, after the latter has been moulded.

As observable in figure 6, over-moulding is obtained such that the end portion 12c of the terminals 12 extends partly within the tubular portion 7, to obtain - therewith - the connector EC - for the electric connection of the device 1. The end portion 12a of the terminals 12 is instead extended into the chamber 8, so as to constitute an electric contact, for direct connection with the circuit 20. As observable in figure 9, the body of each terminal defines, in the zone from which the smaller section ends 12a branch off, at least one rest or lying surface 12a'. In the example the terminals 12 are shaped such that the ends 12a are at least approximately perpendicular to the lying plane of the circuit 20 in the chamber 8.

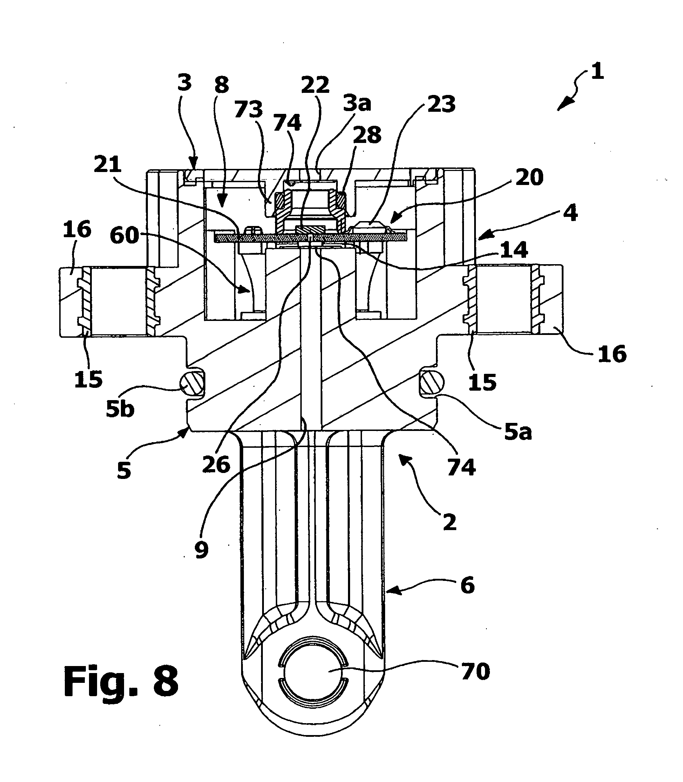

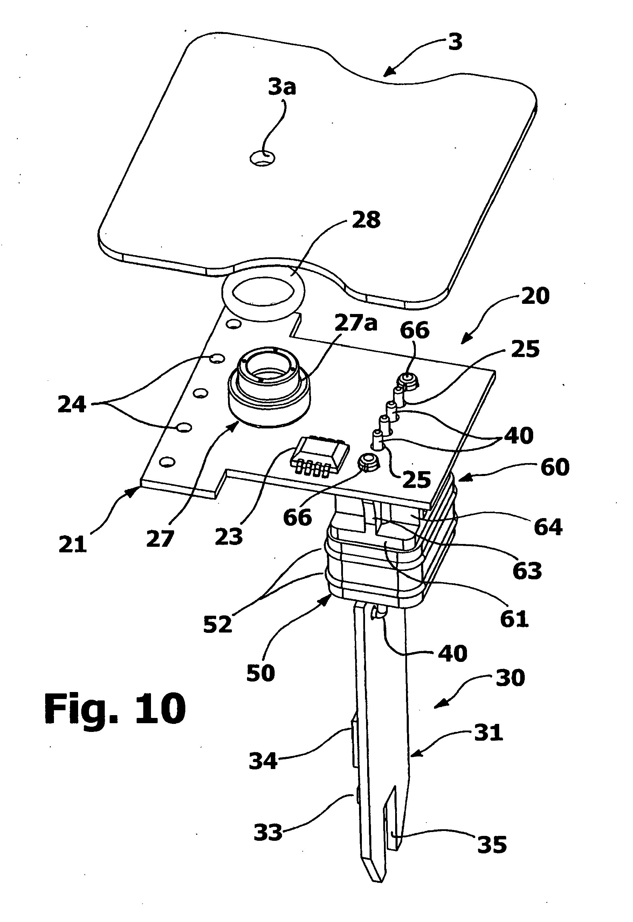

With particular reference to figures 10 and 13-14, the circuit 20, for example a printed circuit board, has a circuit support 21 on which a pressure sensitive component - indicated in its entirety with 22 in figures 6 and 8, and hereinafter referred to as *"pressure sensor"* for the sake of simplicity - is mounted. The printed circuit board 20 has a generally flat configuration and, in this embodiment, it is intended to lie according to a plane substantially perpendicular to the axis of the portions 5 and 6 of the body 2, or substantially parallel to the axis of the portion 7.

In a preferred embodiment, the pressure sensor 22 is of the silicon type, for example having a structure constituted by several parts or layers integral with each other (glued or welded). In another embodiment, the pressure sensor 22 may instead be of the ceramic type, for example with a monolithic body. The sensor 22 may comprise a so-called *silicon die,* such as an integrated electronic circuit, having a portion or part shaped like a membrane deformable depending on the pressure to be detected, such die possibly comprising other parts and/or being glued on a relative glass or ceramic substrate, or made of any other material suitable for the purpose; in the illustrated example, the die or the assembly of parts forming it is secured (directly or indirectly) to the circuit support 21. The method for providing and connecting sensors of the indicated type are per se known, and do not require a detailed description herein.

The circuit support or board 21 is substantially rigid and planar, made of electrically insulating material, such as a ceramic or glass fibre material, provided with electrically conductive tracks, not represented herein, of per se known type. In the illustrated example the circuit 20 includes one or more electronic components, only one of which is represented, indicated with 23, such as an integrated circuit or a microcontroller, for example for processing the signals detected by the pressure sensor 22 and/or by a temperature sensor and a humidity sensor of the circuit 30, described hereinafter. The pressure sensor 22 used and/or the relative circuit 20 can be configured with the aim of allowing programming the operation and/or detection parameters, comprising means for memorizing and/or processing data. In other embodiments, the board 21 may be without electronic components, the circuit 20 in such case having the sole function of electric connection, through the abovementioned conductive tracks, between the sensor means of the device and the terminals 12 for connecting the device. The architecture or circuit layout, the electric and/or electronic components possibly present and the possible control logic provided for the circuit arrangement constituted by the circuits 20, 30 may be of any other type known to a man skilled in the art, and thus they shall not be described further herein.

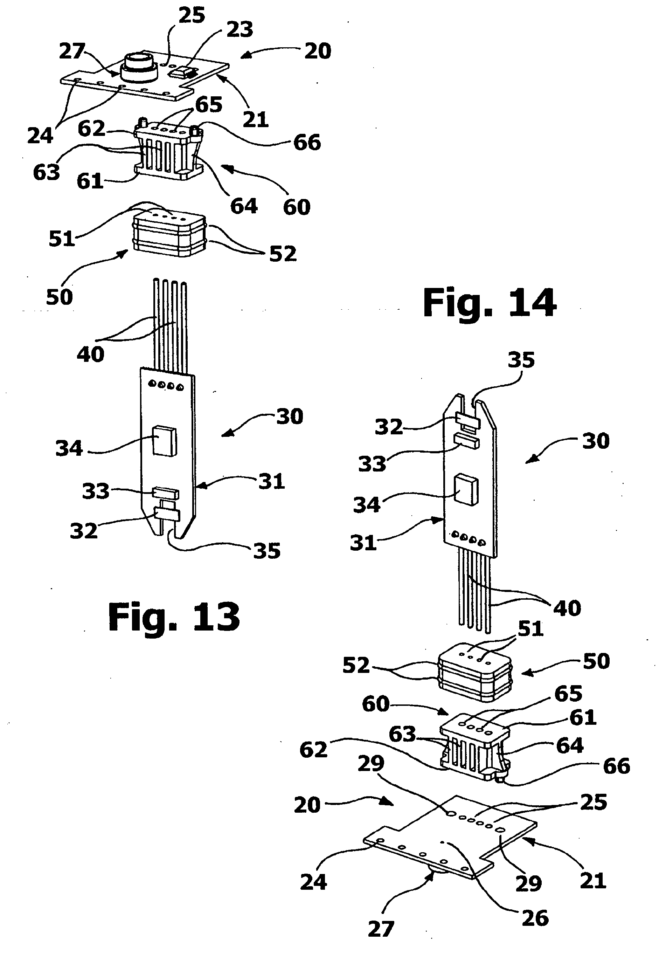

Some of the conductive tracks present on the board 21 terminate, at an end thereof, at the first holes 24 and second holes 25 (see for example figures 10, 13 and 14) formed passing through in the board 21, at such holes the abovementioned tracks being preferably configured to form a pad or a ring or a bushing, so as to surround the holes or cover the surfaces that delimit them. The holes 24 are provided for connecting, by coupling and/or welding, the ends 12a of the terminals 12; similarly, the holes 25 are provided for connecting, by coupling and/or welding, the first ends of the terminals 40. A through hole 26 (figures 6, 8 and 14), at which the pressure sensor 22 is mounted, and two mounting through holes, indicated with 29 only in figure 14, whose function shall be explained hereinafter, are further formed in the board 21.

In a preferred embodiment, a pressure sensor protection body, indicated with 27, for example made of moulded plastic material, is mounted on the board 21. In the exemplifying embodiment the body 27 is tubular and, as observable for example in figure 10, it has a lower part and an upper part between which a step or surface seat 27a is defined, for positioning a respective radial seal member 28, preferably constituted by an O-ring gasket.

In the example, the two parts of the body 27 defining the step 27a are substantially cylindrical, having a different diameter, but such shape shall not be deemed to be restrictive. In other implementations, not represented, and according to the geometries selected for the coupling parts, the seal member 28 may be replaced by an axial seal element or by an element capable of providing both an axial seal and a radial seal (in such case, the axial or radial-axial seal element shall not necessarily be coaxial or centred with respect to the axis of the pressure sensor). As observable in figures 6 and 8, the protection body 27 is mounted on the board 21 and laterally surrounds the sensor 22, slightly spaced thereform. In a preferred embodiment, a protective material, not represented, which covers at least the sensor 22 is poured into the space delimited by the body 27. This protective material, for example a gel, is preferably of the type resistant to chemical attack (for example a fluoro-silicone gel) and is adapted to transmit a reference pressure on the sensor 22, simultaneously insulating it from the atmosphere.

As observable for example in figures 10, 13 and 14, also the second circuit 30 comprises a respective circuit support or board 31, substantially rigid and planar, made of electrically insulating material and provided with electrically conductive tracks (not represented). The circuit 30 includes a plurality of components, among which an element sensitive to the humidity of the fluid and an element sensitive to the temperature of the fluid. The element sensitive to humidity, hereinafter referred to as "*humidity sensor"* for the sake of simplicity, is indicated with 32 in the figures and it can be a sensor of the capacitive type, i.e. including a conductive material separated by a capacitive material having variable capacity, which depends on the relative humidity content of the environment surrounding it: a capacity variation thus indicates the water vapour content in the surrounding environment. The abovementioned element sensitive to temperature, hereinafter referred to as "*temperature sensor*" for the sake of simplicity, may for example be a negative temperature coefficient or NTC resistor and it is indicated with 33 in the figures.

Preferentially, an integrated circuit, indicated with 34, preferably a programmable one, for example of the ASIC type, is also mounted on the board 31, for receiving and processing the variation of the capacity value of the sensor 32. In a preferred embodiment, the ASIC circuit 34 also has a respective input for the temperature sensor 33 and is configured for compensating the humidity value obtained through the sensor 32 upon the variation of the temperature, detected through the sensor 33. The circuit 34 may obviously be configured even with the aim of processing the signals generated by the temperature sensor 33, besides those generated by the humidity sensor 32.

Some of the conductive tracks present on the board 31 terminate, at an end region thereof, at through holes, not indicated, where the abovementioned tracks are preferably configured to form a pad or ring or bushing. The abovementioned holes are provided for connecting, by coupling and/or welding, the second ends of the interconnection terminals 40. As observable for example in figures 6 and 10, the terminals 40 are bent at a right angle, in proximity to the abovementioned second end. Thus, the two circuits 20 and 30 may be easily connected to each other to lie according to respective planes substantially orthogonal to each other, once the terminals 40 have been connected between the two boards 21 and 31. The terminals 40 could however be configured differently, i.e. provided with different electric connection elements to the printed circuit boards 21 and 31.

The board has a slit 35 - in the end region of the board 31 opposite to that in which the holes for the terminals 40 are formed - so as to provide a sort of fork at which the humidity sensor 32 is mounted. As observable, for example in figures 13 and 14, the sensor 32 is substantially bridge-mounted on the slit 35, in such a manner that the body thereof can be better exposed to the fluid subject of detection, as observable hereinafter. It should be observed that the slit 35 could also be formed in a region of the board 31 different from the lower end, for example also at a central zone of the board 31. Likewise, the temperature sensor 33, or both the temperature sensor 33 and the humidity sensor 32 could be mounted at the slit 35. In other embodiments, the board 31 could provide for two slits, each for the bridge-mounting of a respective sensor 32 and 33.

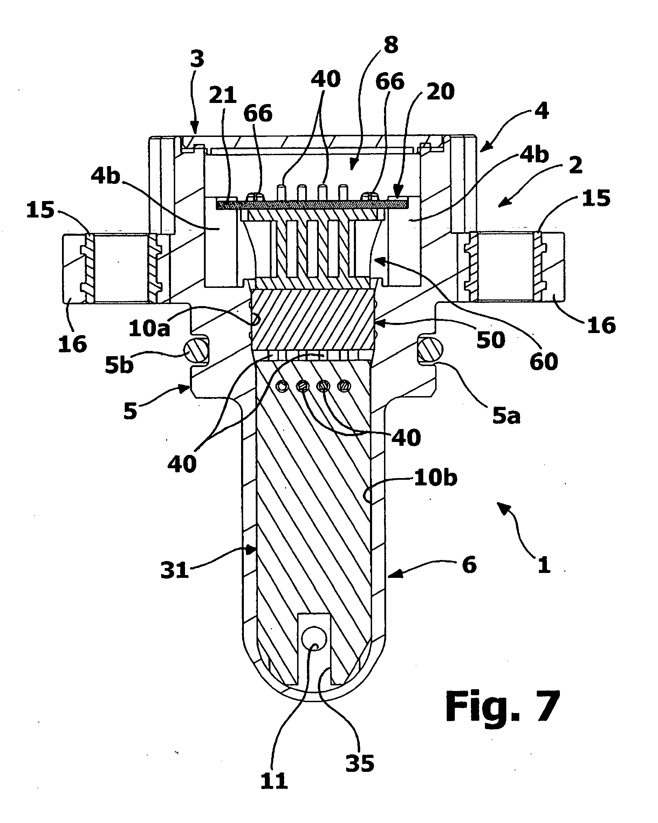

In an embodiment, components for mounting the circuit arrangement are positioned between the two circuits 20 and 30. For such purpose, a seal member, preferably made using a synthetic and electrically insulating material, such as an elastomer, is indicated with 50 in figures 2, 6, 7, 10, 13 and 14. The body of the seal member 50, which is elastic and/or flexible, is intended to be housed within the part 10a of the chamber 10, as clearly observable for example in figures 6 and 7. In the example, as observable for example in figures 13 and 14, the body of the member 50 is generally parallelepiped-shaped and it is traversed in an axial direction, i.e between the upper and lower faces thereof, by through holes 51, which are provided as many as the terminals 40. The dimensions in transverse section, or the diameter, of the holes 51 are preferably smaller with respect to the transverse section or diameter of the terminals 40, in such a manner to guarantee a high degree of sealing between the parts in question. One or more annular sealing reliefs 52, intended to further increase the sealing between the member and body 2 extend on the four outer faces of the body of the member 50.

In an embodiment, a spacer member or spacer, indicated with 60 in figures 2, 6-8, 10, 13 and 14, preferably having a body made of electrically insulating material, is positioned between the two circuits 20 and 30; such insulating material is preferably substantially rigid, such as for example a substantially rigid thermoplastic material or an elastomer which is relatively hard or has a predefined deformation. In the illustrated embodiment, the spacer 60 is positioned between the seal element 50 and the circuit 20 and serves the functions of supporting and positioning the latter. As observable in figures 13 and 14, the spacer 60, for example made of moulded thermoplastic material, has a base 61 and a head 62 connected to each other by means of a plurality of upright walls, among which generally parallel and flat-shaped upright walls 36, which are orthogonal to a further upright wall 64.

As previously mentioned, the elements 50 and 60 may possibly be made in a single piece, for example moulded in a relatively hard elastomer.

The area of the base 61 substantially corresponds to that of the upper face of the seal member 50, while the area of the head 62, on which the board 21 is intended to rest, is slightly larger with respect to that of the base 61.

The body of the spacer 60 is traversed in an axial direction, i.e. between the base and the head, by through holes 65, as many as those of the interconnection terminals 40. The dimensions in transverse section or the diameter, of the holes 65 substantially coincide or are slightly larger than the dimensions in transverse section or the diameter of the terminals 40. Possibly, the body of the spacer element can be over-moulded on the terminals 40. Two further blind holes, not indicated, are provided at the head 62, at the sides of the series of through holes 65, at which blind holes securing or positioning elements 66 are received or formed integral therewith, used for positioning and/or securing the spacer 60 to the board 21.

As mentioned, within the portion 4 of the body 2 there is defined the cavity or chamber 8, at the bottom of which the chamber 10 opens, defined axially in the portions 5 and 6 of the body 2. The chamber 8 is not in fluid communication with the lower part 10b of the chamber 10, due to the presence - in the chamber part 10a - of the seal member 50, while it is connected with the environment of the detection zone of the pressure duct 9, as clearly observable in figures 6 and 8.

The duct 9 passes through in a support formation 4a (figure 9) defined by the body 2 in the chamber 8, and support reliefs 14 for the board 21 of the circuit 20 rise from the top part of this formation 4a. Other supports for the printed circuit board 20, indicated with 4b in figures 7 and 11, also defined within the chamber 8, provided for in proximity of a longitudinal end of the same chamber.

The end portions 12a of the terminals 12 project from a further formation 4c (figure 2 and 9) of the body 4 that extends transversely to the chamber 8, at the opposite end with respect to the supports 4b.

As previously mentioned, with the aim of obtaining the device 1, the material constituting the body 2, preferably an injection-mouldable thermoplastic material, is over-moulded onto the terminals 12, in such a manner that the ends 12a of the terminals extend substantially vertically within the chamber 8, as observable in figure 9, projecting from the part 4c in proximity to the end of the chamber opposite to the supports 4b. In the illustrated example, the material forming the body 2 is also over-moulded on metal bushings 15, to form brackets 16 thereof for anchoring the device 1 (see for example figures 7 and 8).

In a preferred embodiment, one or more passages that place the inside of the device 1 in communication with the environment outside the chambers 8, 10 are provided with a membrane. For such purpose, breathable and impermeable membranes, designated by 70 in figures 1-3, 6, 8, 9 and 11, are secured to the passages 11, preferably outside the body 2, for example by gluing or thermowelding. The membranes 70 have the purpose of allowing the sensors 32 and 33 to be licked by the fluid, for example moist air, but preventing the passage of condensate and water drops, solid particles in air (for example soot or particulate) and corrosive gases combined with said condensate or water, which may generate acids (for example sulphuric or nitric acid)

In the preferred embodiment, the membranes 70 are membranes with pores having a width or diameter ranging between a minimum of about 0.1 micron to a maximum of about 10 microns, depending on the type of application of the device 1. The membranes are preferably formed starting from a polyester-based nonwoven fabric, wherein the pores are obtained through etching techniques. Preferably the membranes 70 are made in such a manner to have an adhesive layer, through which they are applied outside the body 2.

In a preferred embodiment, and as evincible for example in figures 1, 2, 9 and 11, the body 2, or a portion 6 thereof, is configured such that the zones for securing the membrane 70 are at least slightly arched. Thus, also the membranes 70, when secured to the body, are arched and this arrangement reduces the risk of accumulation of condensate or dirt thereon.

A further membrane, preferably constructed analogously to the membranes 70, is indicated with 71 in figures 2, 6, 8, 9 and 11, which further membrane is positioned in the chamber 8, and precisely on the formation 4a (see figure 11), at the upper end of the duct 9 which serves as a pressure port. As observable, for example in figures 9 and 11, the reliefs 14 are circular-shaped, in such a manner to surround a region for positioning the membrane 71. Also the membrane 71 can be glued or thermowelded to the body 2.

In the exemplified embodiment, the pressure sensor used in the device 1 is a relative pressure sensor, and thus the cover 3 has a through hole 3a (see for example figures 2 and 10), for allowing the sensor to have the required reference ambient pressure. In other embodiments, the hole 3a may also be conferred with other functions, for example venting, to prevent the occurrence of overpressures within the chamber 8 (in such case, the connection between the duct 9 and the sensor 22 shall be sealed).

As observable in figure 12, a tubular appendage, indicated with 73, preferably made integral with the body of the cover, is provided for in the internal part of the cover 3, at the hole 3a. In the example, the internal profile of the tubular appendage 73 is essentially constituted by two cylindrical sections having different diameter, in such a manner that a step or seat, indicated with 73a in figure 12 is defined therebetween. Obviously, the shape of the appendage 73 can be different from the illustrated one, and it may vary depending on the shape of the protection body 27 and of the seal element 28. Preferably, a further membrane, indicated with 74, designed analogously to the membrane 70 and 71, for example glued or welded on the wall of the cover 3 is secured to the bottom of the appendage 73 in which the hole 3a is formed.

In a possible practical embodiment, the device 1 is mounted as follows.

The two circuits 20 and 30 are prearranged according to known methods, by connecting the various electric/electronic components and the sensor means 32 and 33 to the relative conductive tracks of the boards 21 and 31, for example through the SMD mounting method. The pressure sensor 22 is glued to the board 21 at the respective hole 26. The protection body 27 is then mounted or glued on the board 21.

The interconnection terminals 40 are inserted into the through holes 65 of the spacer 60 and into the through holes 51 of the seal member 50, and the board 21 of the circuit 20 is secured to the spacer 27 by means of the securing or positioning members 66. The upper ends of the terminals 40 are coupled in an electrically conductive manner to the respective holes or electric tracks of the board 21 and the lower ends thereof are coupled in an electrically conductive manner to the relative holes or electric tracks of the board 31. Obviously, it is possible to proceed in inversely, i.e. connecting the terminals 40 to the circuit 30 first and then to the circuit 20.

The seal member 50 is then positioned in such a manner that the upper face thereof is at contact with the base 61 of the spacer 60. The circuit arrangement thus formed is inserted into the chamber 8, with the circuit 30 introduced into the chamber 10. The arrangement is thus pushed downwards, until the seal element 50 fits, with elastic interference, into the upper part 10a of the chamber 10, and with the circuit 30 thus extended within the lower part of the chamber 10b.

The fact that, in a preferred embodiment, the body of the terminals 40 is relatively rigid in the axial direction, though relatively flexible in the direction transverse to the axis thereof, allows performing an efficient axial thrust, during the step of inserting the circuit 30 into the casing, though allowing a slight lateral flexure, possibly useful for allowing slight settling movements of the board 31 in the seat 10.

In order to improve positioning of the circuit 30, grooves or axial guides (as exemplified in figure 6, reference G) can advantageously be provided for along the opposite sides of the chamber part 10b, between which a respective edge region of the board 31 is received.

Following the above mentioned fitting, the board 21 of the circuit 20 rests on corresponding supports 4b and on the reliefs 14 (see for example figures 6 and 8). Furthermore, as observable in figure 6 (holes not indicated), the ends having restricted section or being sharp-pointed of the portions 12a of the terminals 12 are inserted or fitted in the connection holes 24 of the board 21, while the lower face of the board lie on the rest surfaces 12a' of figure 9 of the terminals 12, which thus contribute to positioning and supporting the circuit 20. The ends 12a of the terminals may thus be welded from above to the conductive tracks of the circuit 20, at the holes 24, from the upper part of the board 21. Possibly, a material, such as a synthetic resin, may be applied on the ends 12a of the terminals 12 welded to the circuit 20, and also on the ends of the terminals 40 welded to the two boards 21 and 31, for protections against oxidation and/or corrosion.

After the corresponding seal element 28 has been fitted onto the step or seat 27a of the protection body 27, the chamber 8 can be closed by fixing the body or cover 3. The coupling between the bodies 2 and 3 can be obtained through any known method, for example by welding the two bodies to each other (laser welding or hot remelting welding of part of the bodies or vibration welding or ultrasonic welding, etcetera), or by applying an adhesive and sealing material between the two bodies, or by mechanically deforming one of the two bodies (preferably when made of metal material) with respect to each other, with possible interposition of a gasket. In a possible embodiment, for example, the bodies 2 and 3 are made using materials suitable to allow laser welding. For this purpose, the bodies 2 and 3 can be made using material transparent and opaque to the welding laser beam, respectively, or vice versa; thus, upon impact from the laser beam, the material of the opaque body, for example the body 3, is heated locally, until it melts and thus welds against the material of the transparent body, for example the body 2, traversed by the beam without being heated.

The positioning of the body 3 is performed in such a manner that the protection body 27 of the pressure sensor 22 is inserted into the corresponding tubular appendage 73. Thus, the seal element 28 is interposed, in a condition of at least slight elastic compression, between the step 73a of the appendage 73 and the step 27a of the body 27.

It should be observed that, following the mounting described previously for the arrangement constituted by the circuits 20 and 30, the fork-shaped end of the board 31 is positioned in the lower region of the chamber part 10b. The slit 35, and thus the humidity sensor 32 bridge-mounted thereon, is substantially at the passages 11 (see for example figure 6), therebetween, in such a manner to be exposed to the fluid subject of detection.

Under normal conditions of use, the device 1 is connected to a line of the fluid subject to monitoring, by means of the portion 5 fitted, for example, in an aperture along a pipe of the fluid in question. Such arrangement is schematically exemplified in figure 6, where a pipe is indicated with 102, in the inside C of which the fluid subject to measurement is found; let assume that the pipe 102 is an air delivery pipe of an internal combustion engine.

In this manner the humidity and temperature sensors 32 and 33 are exposed to the fluid, which can reach inside the chamber part 10b through the passages 11. The membranes 70, though allowing the detection of humidity by the sensor 32, prevent the penetration of liquids and particulate. The sensor 32 generates a capacity signal or value representing the relative humidity of the fluid, which is processed by the circuit 34 and/or the microcontroller 23; likewise, the sensor 33 generates a resistance signal or value representing the temperature of the fluid, which can also be processed through the circuit 34 and/or the microcontroller 23. These signals, possibly processed by the circuit 34, may reach the microcontroller 23 due to the conductive tracks of the two boards 21 and 32, connected to each other by means of the terminals 40.

The pressure of the aeriform fluid can be detected due to the presence of the duct 9 which, in the mounted condition of the device 1, is however in communication with the inside C of the pipe 102 in which the fluid is found. In the pipe 9 the pressure of the fluid exerts a force on a membrane portion of the sensor 22, causing a flexure or deformation thereof, which generates - at the terminals of the sensor - a signal representing the pressure value of the fluid. Also in this case, the presence of the membrane 71 arranged at the upper end of the pipe 9 prevents potentially harmful residual liquids and particulate from reaching into the chamber 8. Also the membrane 74 arranged at the hole 3a of the cover 3 prevents foreign bodies and/or liquids from reaching into the chamber 8. The gel covering the sensor 22, contained in the protection body 22, prevents the risks of contamination for the sensor itself. It should also be observed that the presence of the protection body 27 and of the appendage 73, as well as the relative seal element 28, allows the pressure sensor to have the required reference ambient pressure, without any fluidic connection with inside of the chamber 8. The body 27, the appendage 73 and the seal element 28 also meet the functions of positioning the circuit 20 which, due to the element 28, is elastically pressed against the abutments 14.

As previously mentioned, preferably the inlet of the duct 9 is formed at a position spaced apart from the inlet passage 11, the former communicating only with the chamber 8 and the latter communicating only with the chamber part 10b. Furthermore, in a preferred embodiment, the inlet of the pipe 9 is formed in the body of the device at a position closer to the wall of the pipe 102 with respect to the inlet passage 11, which is preferably found in the central or innermost region of the pipe 102.

Due to this arrangement, the pressure of the fluid can be detected at a zone where the airflow is less influenced by vortices, which could potentially give rise to overpressures and depressions, and thus make the measurement carried out through the sensor 22 incorrect.

Actually, the fluid motion can have two different regimes in the same pipe, i.e. a laminar regime, in which the coaxial cylindrical layers have a speed increasing from zero for the layer adherent to the walls of the pipe to the maximum value corresponding to the axis, and a swirling or turbulent regime, in which the layers acquire a speed almost equivalent to the maximum at a short distance from the walls, forming vortices. For both regimes, the zone near the walls of the pipe is that where there is less turbulence. Thus, with the previously described arrangement, the air port for the pressure sensor 22 is positioned near the wall of the pipe 102, at a zone referred to as "laminar sublayer".

Furthermore, preferably, the pressure detection duct 9 is provided in the body of the device in such a manner that, in the installed condition, such pipe is substantially orthogonal to the flow of the fluid in the pipe 102. Such arrangement allows minimising:
- the overpressures (or depressions in the opposite direction) generated by the kinematic effect of the air; the abovementioned arrangement allows preventing that the fluid, under the force of the speed thereof, creates - on the membrane portion of the pressure sensor 22 - an overpressure (were it in the opposite direction it would be subjected to the depression created by the speed of the flow);
- the penetration of dirt into the pipe; the abovementioned arrangement allows preventing the accumulation of such dirt, water drops, etcetera at the end of the duct 9 where the pressure sensor 22 is located, or the clogging of the membrane 71.

Still according to the proposed arrangement, the humidity sensor 32 and the temperature sensor 33 are substantially at a central zone of the flow of the fluid, where the speed of the flow is higher. This allows detecting, in the quickest manner as possible, the humidity and temperature variations (as mentioned, for example, when a vehicle enters into a tunnel there may be a rapid temperature variation, within a few tens of a second, from the external temperature of 30°C and low relative humidity to a temperature within the tunnel of 12°C and high relative humidity).

Through the conductive tracks of the board 21, the signals representing pressure and temperature, possibly processed in a per se known manner by the microcontroller 23, reach the terminals 12 of the device 1, which are electrically coupled to an external wiring, not represented, connected to a suitable external control unit, such as an electronic control unit belonging to a vehicle, for example a fuel injection control unit and/or a nitrogen oxides emission control unit.

As observable, with the described configuration, the terminals 12 of the device 1 are directly connected to the circuit 20, without the interposition of special connection elements, such as flexible connection elements. Same case applies for the interconnection terminals 40 for connecting the two circuits 20 and 30 to each other. The embodiment of the device 1 is thus facilitated, in that the casing 2-3 thereof is mostly obtainable through only one operation for moulding thermoplastic material on the terminals 12 and on the bushings 15, when provided for, and the circuit arrangement formed by the circuits 20 and 30, previously provided with respective components, can be positioned through simple linear movements towards the inside of the chambers 8 and 10, with the ends 12a of the terminals 12 serving in this step also as elements for positioning the printed circuit board 20. The process is easily automatable, even regarding the performance of the operations of welding the terminals to the circuits and the possible application of resins for protecting the terminals or other electrical connection parts inside the chambers 8 and 10.

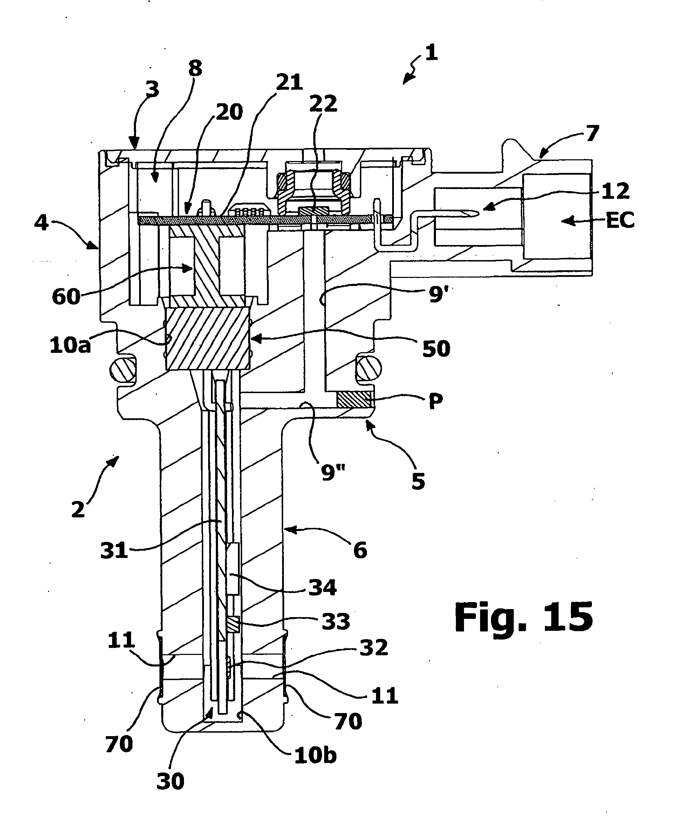

Figure 15 illustrates a possible variant embodiment of the body 2, which is configured such that the duct for the detection of the pressure is in fluid communication with the chamber part 10b. In this embodiment, said duct comprises two branches substantially orthogonal with respect to each other, and precisely:
- a first branch, indicated with 9', that extends in an axial direction through the body portion 5, substantially perpendicular to the direction of the flow of the fluid to be detected, and
- a second branch, indicated with 9", that extends between the chamber part 10b and the outside the body portion 5, and to which the branch 9' is connected.

P indicates a closing element or cap, inserted into the duct branch 9", in such a manner to close it at the part thereof which opens outside the body portion 5. Though less advantageous with respect to the preceding embodiment in terms of pressure detection accuracy, this embodiment may help avoiding the use of the membrane 71.

The device 1 according to the invention is used in combination with exhaust gases treatment systems, for example SCR (Selective Catalytic Reduction) systems for reducing nitrogen oxides (NOx) and particulate emissions, particularly in motor vehicles with diesel engines having a cubic capacity greater than 3500 cc. As known, the SCR systems allow saving in terms of fuel and engine maintenance and they are based on the following principle:
- the engine, during combustion, produces nitrogen oxides, which are toxic;
- the nitrogen oxides reduction process occurs in an SCR catalyst;
- an additive or reduction agent, constituted by a solution of urea in distilled water, is injected into the SCR catalyst and transforms the nitrogen oxides present in the exhaust gases into water and nitrogen; currently, the most common additive, known by the name AdBlue™ is a solution of 32.5% urea in distilled water.

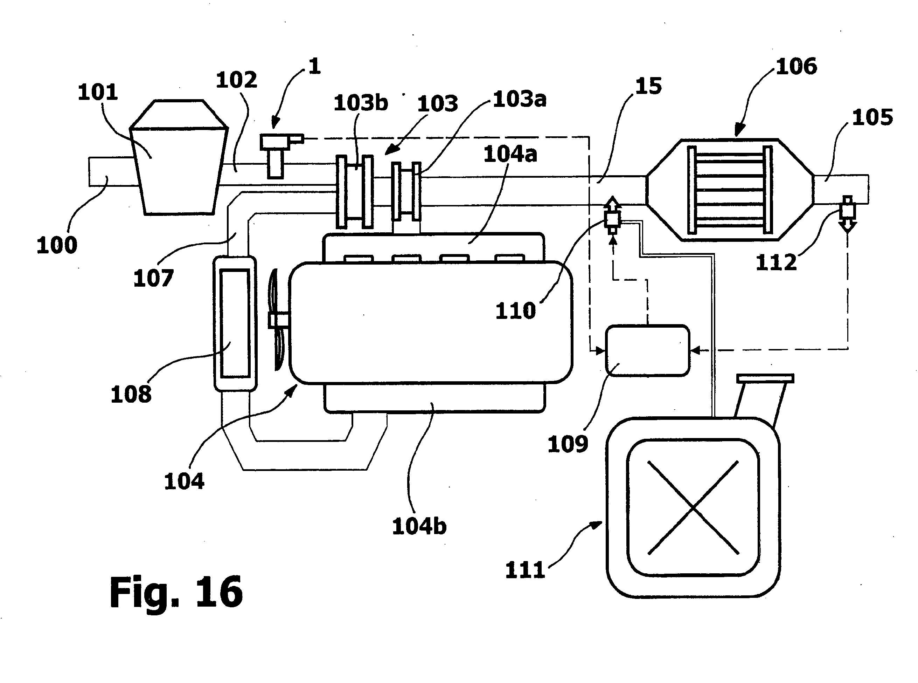

An example of application of the device 1, in combination with an SCR system is schematically represented in figure 16.

100 designates an air inlet, 101 designates a filter for the inflowing air and 102 designates an air delivery pipe, connecting the filter 101 to a turbocharger, indicated in its entirety with 103, comprising a turbine 103a and a compressor 103b.

104 designates an internal combustion engine, with the exhaust manifold 104a thereof connected to the turbine 103a; the outlet of the turbine 103a is connected to a pipe for discharging exhaust gases 105, along which a Urea-SCR catalyst is arranged, indicated with 106, incorporating an SCR catalyst.

The air delivery pipe 102 is connected to the inlet of the compressor 103b, whose outlet is connected to the intake manifold 104b of the engine 104, through a channel 107; an intercooler 108 is provided for on such connection channel 107.

The air is suctioned from the inlet 100, downstream of which the filter 101 withholds the solid particles in suspension, for example dusts. Once filtered, the air passes to the turbocharger 103. The turbine 103a includes a rotor which is rotated by the exhaust gases, coming from the manifold 104a, connected through a shaft to a rotor of the compressor 103b, generally made of a magnesium alloy. The compressor 103b, actuated by the turbine 103a, compresses the air entering from the delivery channel 102 and thus forces it into the intake manifold 104b, supplying to the engine cylinders 104 more air volume than they could suction in the absence of the turbocharger 104. Thus, it is also possible to introduce even a greater amount of fuel into the combustion chamber, thus ensuring greater power for the engine. This however also causes an increase of the NOx emitted by the engine 104. Before being conveyed to the intake manifold 104b, the compressed air exiting from the turbocharger 103 is cooled through the intercooler 108, i.e. a heat exchanger (of the air/air or air/water type), which cools the air exiting from the turbocharger before the air is introduced into the engine 104.

The device 1 according to the invention is installed along the delivery pipe 102, with the aim of measuring the temperature and humidity of the inflowing air, as well as the pressure downstream of the filter 101. The first two parameters are used by the motor vehicle control system, for example an engine control unit and by a control unit of the SCR system, as input to the fuel injection control algorithms and algorithms for the reduction agent - herein assumed to be AdBlue - used in the SCR system.

In the operation thereof, a turbocharged diesel engine generates nitrogen oxides NOx among others. Engine and combustion adjustments alone are not enough for further optimising the emissions; let consider that harmful emissions are typically the following:
- CO (carbon monoxide), usually transformed into CO₂ by a tri-functional catalytic converter, commonly referred to as *"catcon";*
- NO (nitrogen oxide) transformed into NO₂ by the Urea-SCR catalyst;
- HC (unburnt hydrocarbons), usually burnt in an antiparticulate filter;
- PM (particulate), usually withheld in an antiparticulate filter then subjected to periodic regeneration.

Attempts to reduce fuel consumption (and thus the CO and CO₂ emission) and the PM (particulate) inevitably lead to a high value of the NOx generated during combustion. In order to overcome this drawback a Urea-SCR injection system may be installed on medium and high power diesel engines. This injection system applies the Selective Catalytic Reduction system, which is a known chemical process for reducing the exhaust gases NOx.

For the application onto the vehicle, the AdBlue additive serves as a liquid state chemical reduction agent and it is added to the exhaust gases in presence of the catalyst. The reduction agent reacts with the NOx in the exhaust gases forming H₂O (water vapour) and N₂ (nitrogen gas). To obtain this, the AdBlue reduction agent should be dosed accurately through the Urea injector, indicated with 110 in figure 16, arranged upstream of the catalyst 106; a control unit 109 controls all the physical parameters on which the Selective Catalyst Reduction reaction is based.

Upon contact with the hot exhaust gases, the reduction agent, sprayed by the injector 110, separates thus generating ammonia, which reacts with the nitrogen oxides in the catalyst 106, then transforms them into nitrogen particles and water. The control unit 109 carries out the exact dosage of the reduction agent, added in a relative tank 111. The unit 109 which monitors the dosing, connected to the electronic control unit of the engine, mixes - in a balanced manner - the reduction agent/exhaust gases combination, according to the engine parameters (such as the temperature of the inflowing air, the temperature of water, the inflowing air flow rate, the revolutions per minute), so that the reduction agent is always injected at the right amount.

A sensor 112 arranged on the exhaust pipe 105 downstream of the catalyst is used in order to optimise the process on output of the catalyst 106. The detection carried out by the sensor 112 is very important, given that the adjustment of the amount of reduction agent sprayed by the injector 111 depends on it. If the reduction agent is injected, in excess, the surplus part is released into the atmosphere, which is against the law; on the other hand, an insufficient injection of the reduction agent neither allows reducing all the NOx nor reducing the particulate (PM) to the maximum.

The sensor 112 may be sensitive to ammonia (NH₃) or NOx: in either case, the signal generated by the humidity sensor 32 present in the device 1 according to the invention serves for the correct interpretation of the measurements carried out by the sensor 112: as a matter of fact, it should be considered that the humidity of the air has a considerable impact on the signal - generally a low voltage - read by the sensor 112, both when sensitive to ammonia and when sensitive to NOx.

In the application of figure 16, the sensor 22 of the device 1 according to the invention is used for detecting the value of the pressure downstream of the filter 101, and it is used by the motor vehicle control system for deducing the clogging degree of the filter: the greater the pressure difference of the ambient pressure and the pressure downstream of the filter, the greater the clogging degree of the filter. In an embodiment, the printed circuit board 20 can be prearranged in such a manner that the pressure sensor 22 operates as a switch at a given pressure value, i.e. with the function of detecting the clogging degree of the filter, or providing - in output - an analogue signal proportional to the pressure and the power supply voltage. The pressure value obtainable by the sensor 22 can also be used for correctly estimating the relative humidity value, which can depend on the pressure of the gas. The mounting of the device 1 downstream of the filter 101 also prevents the device from being reached by the particulate at considerable amounts.

Characteristics and advantages of the invention are clear from the description, mainly represented by the construction and mounting simplicity of the described device, as well as by the increased characteristics of protection of the active components of the system and by the improved measurement accuracy of the humidity, temperature and pressure values.

In applications similar to those described with reference to figure 16 the device according to the invention is exposed to the flow of a fluid containing substances and particles, such as condensate, water drops, soot, particulate, which could accumulate at the passages 11 of the chamber 10, or on the relative membrane 70.

Thus, in an embodiment of the invention, the device is provided with protection means, prearranged for shielding the passage 11, or each passage 11. In the preferred embodiment, these protection means comprise a shielding element operatively positioned substantially in front of a relative passage 11 and configured for deflecting the trajectory of possible solid or liquid particles present in the flow: thus, the abovementioned particles - after impact with the shielding element - are directed towards regions spaced from the passage 11, thus preventing the same from influencing the corresponding membrane 70.

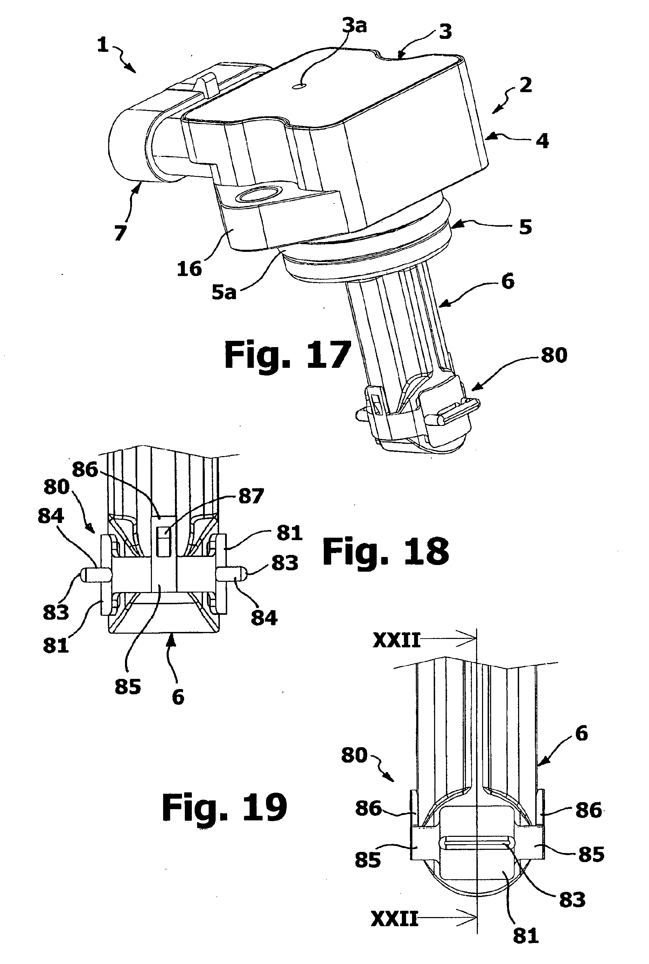

An example of such embodiment is illustrated in figures 17-23, which use the same reference numbers of the preceding figures, to indicate elements technically equivalent to those of figures 1-15.

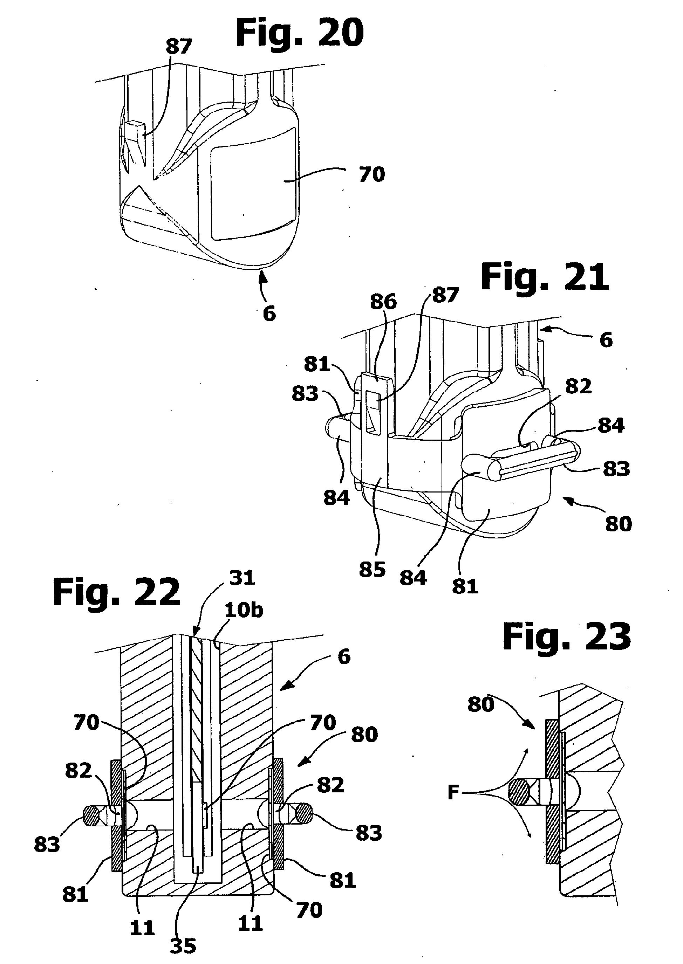

As observable particularly in figures 17-19 and 21, the lower portion 6 is provided with a protection member, indicated in its entirety with 80, which is substantially found at the passages which place the lower chamber of the device 1 in communication with the external environment; also in this embodiment, the lower portion 6 is actually provided with respective passages 11, at which corresponding membranes 70 are mounted, as observable for example in figure 20; in this example, the membranes 70 are generally quadrangular-shaped, and such configuration can also be used in the embodiment of figures 1-15. Also in this case, the membranes 70 are arched and this arrangement reduces the risk of accumulation of condensate or dirt thereon. The passages 11 and the membranes 70 are also shown in the schematic section of figure 22.

In the illustrated example the member 80 includes two opposite main walls, indicated with 81, each centrally provided with a slit 82 (figures 21 and 22); each wall 81 bears a shielding body, at a position substantially facing or in front of the slit 82, spaced therefrom; in the example, the shielding body is made up of a transverse element 83, substantially cylindrical 83, connected to the wall 81 through upright elements 84. The two walls 81 are connected to each other by means of lateral walls 85; in the exemplified case, these lateral walls 85 each have hooking means, such as a tab 86 defining a hooking seat, intended to be engaged with a corresponding hooking element or tooth 87 defined outside the lower portion 6 (see for example figure 20).

In the practical use of the device, the slit 82 of the member 80 allows placing the chamber 10b, through the membrane 70, in communication with the outer environment, as observable for example from figure 22. On the other hand, the solid or liquid particles possibly present in the flow of the fluid (such as particulate or water drops) do not directly strike the passage 11, or the corresponding membrane 70, due to the presence of the shielding element 83, which provides for deflecting the trajectory of possible particles. In particular, the abovementioned particles - after impact with the element 83 - are directed towards regions spaced from the passage 11, as schematically represented in figure 23, where the arrow F indicates the deflected trajectory of the particles.

In a possible embodiment, the diameter or the similar characteristic dimension of the element 83 is slightly larger than the diameter of the passage 11 or of the slit 82, given that the fluid threads tend to contract after passing beyond the element 83.

In the illustrated example the shielding element 83 is approximately cylindrical, but such shape shall not be deemed binding, given that the element 32 could be flat-shaped, or elliptic-shaped, or triangular-shaped, and so on and so forth. Likewise, the fact that the member 80 is configured as a separate component which can be secured to the lower portion 6 shall not be deemed as an essential characteristic, in that the functions thereof could be obtained through a shielding element obtained in a single piece with the body of the portion 6; for example, the shielding element could be configured as a fin made in a single piece with the portion 6 and bent in front of the relative passage 11.

Shielding means could also be possibly provided for at the opening of the duct 9. For example, the corresponding membrane (indicated with 71 in the figures regarding the preceding embodiments) can be mounted on the portion 5 of the body 2, at the lower end of the duct 9, i.e. substantially flush with the internal wall of the pipe 102 of figure 6, and the protection or shielding means secured to, or made in a single piece with said portion 5.

It is clear that the sensor device described by way of example can be subjected to numerous variants, without departing from the scope of protection of the invention as defined in the claims that follow.

The device sensor according to the invention can be provided with means for shielding against electromagnetic interference (EMI). These means can advantageously comprise a layer of electrically conductive material, deposited on the internal surface of the chamber 8 and/or of the chamber part 10b, except for some zones, and precisely zones susceptible to the risk short-circuit and possible zones in which aeration gaps are possibly provided for. Preferably the abovementioned layer is however arranged at contact with a terminal 12 electrically connected to an electric potential adapted to provide the abovementioned shielding, preferably a ground potential.

It may also be provided for that the transmission of data between the device 1 and a respective control unit, such as the unit 109 of figure 16, occurs through a wireless transmission, for example in radiofrequency: in such a case, the device 1 incorporates, preferably in the circuit 20, also a transmitter or transceiver and a battery or a corresponding power supply circuit.

Reference to "an embodiment" in this description indicates that a particular configuration, structure or characteristic described regarding the embodiment is included in at least one embodiment. Hence, terms such as "embodiment", possibly present in various parts of this description do not necessarily refer to the same embodiment. Furthermore, particular configurations, structures or characteristics may be combined in any suitable manner in one or more embodiments.

## Claims

1. An exhaust gas treatment system of the SCR type or for reducing nitrogen oxides and/or particulate emissions of an internal combustion engine, including:
- a catalyst device (106), operatively set along a pipe (105) of the exhaust gas of the engine (104), and a sensor (112) mounted on said pipe (105) downstream of the catalyst device (106), for detecting possible presence in the exhaust gas of one of ammonia and nitrogen oxides;
- a detection device (1) having a casing (2, 3)housing a circuit arrangement is housed, including humidity sensor means (32), temperature sensor means (33) and pressure sensor means (22), for measuring a humidity value, a temperature value and a pressure value of a fluid, respectively, the detection device (1) being mounted on a air delivery pipe (102) upstream of the engine (104) and downstream of an air filter (101) of the engine (104);
- a control unit (109) arranged for adjusting the amount of a liquid reducing agent injected in an engine exhaust gas upstream of the catalyst device (106) based on detections carried out by the detection device (1) at least through said humidity sensor means (32) and detections carried out by said sensor (112).

2. The exhaust gas treatment system according to claim 1, wherein the pressure sensor means (22) are housed in a first chamber (8) of the casing (2-3) whereas the humidity sensor means (32) and the temperature sensor means (33) are housed in a second chamber (10b) of the casing (2, 3).

3. The exhaust gas treatment system according to claim 2, wherein the second chamber (10b) is defined in a first body (2) of the casing (2, 3) having at least one first passage (11) which places the second chamber (10b) in communication with the outer environment, and wherein the detection device (1) comprises protection means (80), prearranged for shielding the first passage (11), the protection means (80) preferably comprising a shielding element (83) configured for deflecting the trajectory of solid or liquid particles, the shielding element (83) being in particular operative substantially in front of the first passage (11) and spaced therefrom.

4. The exhaust gas treatment system according to any one of the preceding claims, wherein in a first body (2) of the casing (2-3) a first and a second chamber (8, 10b) are defined, the first body (2) having a first passage (11) which places the second chamber (10b) in communication with the outer environment and a second passage (9) which places the first chamber (8) in communication with the outer environment, the first passage (11) having an inlet formed in the first body (2) at a position that is spaced apart with respect to an inlet of the second passage (9), where in particular the first passage (11) communicates only with the second chamber (10b) and the second passage (9) communicates only with the first chamber (8).

5. The exhaust gas treatment system according to any one of the preceding claims, wherein the circuit arrangement includes at least one circuit support (21, 31) having a slit (35) and at least one of the humidity sensor means (32) and the temperature sensor means (33) is bridge-mounted on the slit (35).

6. The exhaust gas treatment system according to any of claims 2 to 5, wherein the pressure sensor means (22) are mounted on a first circuit support (21) housed in the first chamber (8), the humidity sensor means (32) and the temperature sensor means (33) are mounted on a second circuit support (31) housed in the second chamber (10b), the first and the second circuit support (21, 31) being connected through interconnection terminals (40), particularly substantially rigid interconnection terminals.

7. The exhaust gas treatment system according to claim 6, wherein the first and the second circuit support (21, 31) are positioned in the first and in the second chamber (8, 10b) according to respective lying planes that are substantially orthogonal to each other, the first and the second chamber (8, 10b) being insulated from each other by a seal member (50) which is traversed in an axial direction thereof by an intermediate portion of the interconnection terminals (40).

8. The exhaust gas treatment system according to claims 3 and 5 or else claims 4 and 5, wherein the first passage (11) comprises a first aperture and a second aperture (11) that are substantially coaxial and formed in the first body (2) at opposite walls of the second chamber (10b), a region of said at least one circuit support (31) where the slit (35) is formed extending between the first and the second aperture.

9. The exhaust gas treatment system according to claim 7, wherein between the seal member (50) and the first circuit support (21) is further arranged a spacer member (60) having a body traversed in an axial direction thereof by a respective portion of the interconnection terminals (40), where in particular the spacer member is secured to the first circuit support (21).

10. The exhaust gas treatment system according to claim 6, wherein the first circuit support (21) has a through hole (26), the pressure sensor means (22) are mounted on a first face of the first circuit support (21) at said through hole (26) and on said face of the first circuit support (21) a tubular protection body (27) is secured, which surrounds the pressure sensor means (22), within the protection body (27) there being preferably a material for protecting the pressure sensor means (22), such as a gel, where in particular the casing (2, 3) comprises a closing body (3) of the first chamber (8) which has, on a face thereof facing the inside of the of the first chamber (8), a protruding tubular element (73) within which the protection body (27) is at least partly inserted, between the tubular element (73) and the protection body there being operatively set seal means (28), the closing body having preferably a through hole (3a) at said tubular element (73).

11. The exhaust gas treatment system according to claim 3 or 4, wherein
- at least one said passage (9, 11) has, at an end thereof, an air-permeable and water-impermeable membrane (70, 71), and/or
- the casing (2, 3) has an intermediate union portion (5), extending under the first chamber (8), the intermediate union portion (5) being traversed by the second passage (9) and a cavity (10) defining the second chamber (10b), particularly substantially parallel to each other.

12. The exhaust gas treatment system according to any of the preceding claims, wherein the casing (2, 3) comprises a closing body (3) of the first chamber (8) that has a through hole (3a) at which an air-permeable and water-impermeable membrane (74) is mounted.

13. The exhaust gas treatment system according to claim 1, further having a connector (EC) comprising connection terminals (12) each having a first portion (12a) that extends within the first chamber (8) and a second portion (12c) that extends outside of the first chamber (8), wherein the first portion (12a) of each terminal (12) defines at least one rest surface (12a') from which a terminal end (12a) having a restricted cross-section branches off, particularly having a generally sharpened shape, which terminal end axially extends according to a direction that is at least approximately perpendicular to the lying plane of the first circuit support (21), wherein the terminal ends (12a) are inserted within respective holes (24) present in a first region of the first circuit support (21), with the first circuit support that rests on the rest surfaces (12a'), and wherein the casing (2, 3) defines, within the first chamber (8), positioning means (4b) for the first circuit support (20) at a second region thereof.

14. Use of a detection device in an exhaust gas treatment system of the SCR type or for reducing nitrogen oxides and/or particulate emissions of an internal combustion engine, wherein
- the detection device has a casing (2, 3) housing a circuit arrangement including humidity sensor means (32), temperature sensor means (33) and pressure sensor means (22), for measuring a humidity value, a temperature value and a pressure value of a fluid, respectively,
- the treatment system includes a catalyst device (106), operatively set along a pipe (105) of the exhaust gas of the engine (104), and a sensor (112) mounted on said pipe (105) downstream of the catalyst device (106), for detecting possible presence in the exhaust gas of one of ammonia and nitrogen oxides;
- the detection device (1) is mounted on a air delivery pipe (102) upstream of the engine (104) and downstream of an air filter (101);
- a control unit (109) is arranged for adjusting the amount of a liquid reducing agent that is injected in the exhaust gas upstream of the catalyst device (106) based on detections carried out by the detection device (1) at least through said humidity sensor means (32) and detections carried out by said sensor (112) of the treatment system;
wherein in particular detections carried out by the detection device (1) are used for obtaining a compensated value of relative humidity of the air and/or for deducing a clogging degree of the air filter (101).

## Patentansprüche

1. Abgasaufbereitungssystem des SCR-Typs zum Vermindern von Stickoxiden und/oder Partikelemissionen einer Brennkraftmaschine, umfassend:
- eine Katalysatorvorrichtung (106), die wirkungsmäßig entlang eines Rohres (105) des Abgases der Maschine (104) angeordnet ist, und einen Sensor (112), der an dem Rohr (105) stromabwärts der Katalysatorvorrichtung (106) angebracht ist, um die mögliche Gegenwart von Ammoniak oder Stickstoffgasen in dem Abgas zu Erfassen;
- eine Erfassungsvorrichtung (1), die ein Gehäuse (2, 3) hat, das eine Schaltkreisanordnung aufnimmt, die Feuchtigkeitssensoreinrichtungen (32), Temperatursensoreinrichtungen (32) und Drucksensoreinrichtungen (22) umfasst, um einen Feuchtigkeitswert, einen Temperaturwert bzw. einen Druckwert eines Fluids zu messen, wobei die Erfassungsvorrichtung (1) an einer Luftzuführleitung (102) stromaufwärts der Maschine (104) und stromabwärts eines Luftfilters (101) der Maschine (104) angebracht ist;
- eine Steuereinheit (109), die dazu eingerichtet ist, die Menge eines Flüssigkeitsreduziermittels in einem Maschinenabgas stromaufwärts der Katalysatorvorrichtung (106) auf der Basis von Erfassungen, die von der Erfassungsvorrichtung (1) wenigstens durch die Feuchtigkeitssensoreinrichtung (32) ausgeführt werden, und Erfassungen einzustellen, die von dem Sensor (112) ausgeführt werden.

2. Abgasaufbereitungssystem nach Anspruch 1, bei dem sich die Drucksensoreinrichtungen in einer ersten Kammer (8) des Gehäuses (2-3) befinden, wohingegen sich die Feuchtigkeitssensoreinrichtungen (32) und die Temperatursensoreinrichtungen (33) in einer zweiten Kammer (10b) des Gehäuses (2, 3) befinden.

3. Abgasaufbereitungssystem nach Anspruch 2, bei dem die zweite Kammer (10b) in einem ersten Körper (2) des Gehäuses (2, 3) ausgebildet ist, der wenigstens einen ersten Durchgang (11) hat, der die zweite Kammer (10b) mit der Außenumgebung verbindet, wobei die Erfassungsvorrichtung (1) Schutzeinrichtungen (80) umfasst, die dazu eingerichtet sind, den ersten Durchgang (11) abzuschirmen, und die Schutzeinrichtungen (80) vorzugsweise eine Abschirmelement (83) umfassen, das dazu eingerichtet ist, die Flugbahn von festen oder flüssigen Partikeln abzulenken, wobei das Abschirmelement (83) insbesondere vor dem ersten Durchgang (11) und davon beabstandet wirkungstätig ist.

4. Abgasaufbereitungssystem nach einem der vorhergehenden Ansprüche, bei dem in einem ersten Körper (2) des Gehäuses (2-3) eine erste und eine zweite Kammer (8, 10b) ausgebildet sind, wobei der erste Körper (2) einen ersten Durchgang (11), der die zweite Kammer mit der Außenumgebung verbindet, und einen zweiten Durchgang (9) hat, der die erste Kammer (8) mit der Außenumgebung verbindet, wobei der erste Durchgang (11) einen Einlass hat, der in dem ersten Körper (2) in einer Position ausgebildet ist, die in Bezug auf einen Einlass des zweiten Durchgangs (9) beabstandet ist, und insbesondere der erste Durchgang (11) lediglich mit der zweiten Kammer (10b) in Verbindung steht und der zweite Durchgang (9) lediglich mit der ersten Kammer (8) in Verbindung steht.

5. Abgasaufbereitungssystem nach einem der vorhergehenden Ansprüche, bei dem die Schaltkreisanordnung wenigstens eine Schaltkreishalterung (21, 31) umfasst, die einen Schlitz (35) hat, und die Feuchtigkeitssensoreinrichtungen (32) und/oder die Temperatursensoreinrichtungen (33) brückenförmig an dem Schlitz (35) angebracht sind.

6. Abgasaufbereitungssystem nach einem der Ansprüche 2 bis 5, bei dem die Drucksensoreinrichtungen (22) an einer ersten Schaltkreishalterung (21) angebracht sind, die sich in der ersten Kammer (8) befindet, die Feuchtigkeitssensoreinrichtungen (32) und die Temperatursensoreinrichtungen (33) an einer zweiten Schaltkreishalterung (31) angebracht sind, die sich in der zweiten Kammer (10b) befindet, wobei die erste und die zweite Schaltkreishalterung (21, 31) durch Zwischenverbindungsanschlüsse (40), insbesondere im wesentlchen starre Zwischenverbindungsanschlüsse verbunden sind.

7. Abgasaufbereitungssystem nach Anspruch 6, bei dem die erste und die zweite Schaltkreishalterung (21, 31) in der ersten und in der zweiten Kammer (8, 10b) gemäß entsprechender Ausbreitungsebenen angeordnet sind, die im wesentlichen orthogonal zueinander sind, wobei die erste und die zweite Kammer (8, 10b) voneinander durch ein Dichtungselement (50) isoliert sind, das in seiner Achsrichtung von einem Zwischenabschnitt der Zwischenverbindungsanschlüsse (40) gekreuzt wird.

8. Abgasaufbereitungssystem nach Anspruch 3 und 5 oder andernfalls 4 und 5, bei dem der erste Durchgang (11) eine erste Öffnung und einer zweite Öffnung (11) umfasst, die im wesentlichen koaxial sind und in dem ersten Körper (2) auf gegenüberliegenden Wänden der zweiten Kammer (10b) ausgebildet sind, wobei sich ein Bereich der wenigstens einen Schaltkreishalterung (31), in dem der Schlitz (35) ausgebildet ist, zwischen der ersten und der zweiten Öffnung erstreckt.

9. Abgasaufbereitungssystem nach Anspruch 7, bei dem zwischen dem Dichtungselement (50) und der ersten Schaltkreishalterung (21) weiterhin ein Abstandselement (60) angeordnet ist, das einen Körper hat, der in seiner Achsrichtung von einem entsprechenden Abschnitt der Zwischenverbindungsanschlüsse (40) gekreuzt wird, wobei insbesondere das Abstandselement an der ersten Schaltkreishalterung (21) befestigt ist.

10. Abgasaufbereitungssystem nach Anspruch 6, bei dem die erste Schaltkreishalterung (21) ein Durchgangsloch (26) hat, wobei die Drucksensoreinrichtungen (22) auf einer ersten Fläche der ersten Schaltkreishalterung (21) an dem Durchgangsloch (26) angebracht sind und auf dieser Fläche der ersten Schaltkreishalterung (21) ein röhrenförmiger Schutzkörper (27) befestigt ist, der die Drucksensoreinrichtungen (22) umgibt, wobei sich in dem Schutzkörper (27) vorzugsweise ein Material zum Schützen der Drucksensoreinrichtungen (22), wie etwa ein Gel befindet, wobei insbesondere das Gehäuse (2, 3) einen Verschlusskörper (3) der ersten Kammer (8) umfasst, der auf einer Fläche desselben, die dem Inneren der ersten Kammer (8) zugewandt ist, ein hervorragendes röhrenförmiges Element (73) hat, in das der Schutzkörper (27) wenigstens teilweise eingefügt ist, wobei zwischen dem röhrenförmigen Element (73) und dem Schutzkörper wirkungsmäßig Dichtungseinrichtungen (28) eingerichtet sind und der Verschlusskörper vorzugsweise ein Durchgangsloch (3a) an dem röhrenförmigen Element (73) hat.

11. Abgasaufbereitungssystem nach Anspruch 3 oder 4, bei dem
- wenigstens ein Durchgang (9, 11) an seinem Ende eine luftdurchlässige und wasserundurchlässige Membran (70, 71) hat und/oder
- das Gehäuse (2, 3) einen Zwischenverbindungsabschnitt (5) hat, der sich unter der ersten Kammer (8) erstreckt, wobei der Zwischenverbindungsabschnitt (5) von dem zweiten Durchgang (9) und einem Hohlraum (10), der die zweite Kammer (10b) bildet, gekreuzt wird, die vorzugsweise im wesentlichen parallel zueinander sind.

12. Abgasaufbereitungssystem nach einem der vorhergehenden Ansprüche, bei dem das Gehäuse (2, 3) einen Verschlusskörper (3) der ersten Kammer (3) umfasst, der ein Durchgangsloch (3a) hat, an dem eine luftdurchlässige und eine wasserundurchlässige Membran (74) angebracht ist.

13. Abgasaufbereitungssystem nach Anspruch 1, weiterhin umfassend einen Verbinder (EC), der Verbindungsanschlüsse (12) aufweist, die jeweils einen ersten Abschnitt (12a), der sich innerhalb der ersten Kammer (8) erstreckt, und einen zweiten Abschnitt (12c) haben, der sich außerhalb der ersten Kammer (8) erstreckt, wobei der erste Abschnitt (12a) jedes Anschlusses (12) wenigstens eine Auflagefläche (12a') bildet, von der ein Anschlussende (12a) abzweigt, das einen beschränkten Querschnitt, insbesondere eine im wesentlichen spitze Form hat, wobei sich dieses Anschlussende in Übereinstimmung mit einer Richtung axial erstreckt, die wenigstens näherungsweise senkrecht zu der Ausbreitungsebene der ersten Schaltkreishalterung (21) ist, wobei die Anschlussenden (12a) in entsprechende Löcher (24), die in einem ersten Bereich der ersten Schaltkreishalterung (21) vorhanden sind, mit der ersten Schaltkreishalterung eingefügt sind, die auf den Auflageflächen (12a') ruht, und das Gehäuse (2, 3) innerhalb der ersten Kammer (8) Positioniereinrichtungen (4b) für die erste Schaltkreishalterung (20) an einem zweiten Bereich derselben bildet.

14. Verwendung einer Erfassungsvorrichtung in einem Abgasaufbereitungssystem des SCR-Typs oder für die Verminderung von Stickoxiden und/oder Partikelemissionen einer Brennkraftmaschine, wobei
- die Erfassungsvorrichtung ein Gehäuse (2, 3) hat, das eine Schaltkreisanordnung aufnimmt, die Feuchtigkeitssensoreinrichtungen (32), Temperatursensoreinrichtungen (33) und Drucksensoreinrichtungen (22) umfasst, um einen Feuchtigkeitswert, einen Temperaturwert bzw. einen Druckwert eines Fluides zu messen,
- das Abgasaufbereitungssystem eine Katalysatorvorrichtung (106), die wirkungsmäßig entlang eines Rohres (105) des Abgases der Maschine (104) eingerichtet ist, und einen Sensor (112) umfasst, der an dem Rohr (105) stromabwärts der Katalysatorvorrichtung (106) angebracht ist, um eine mögliche Gegenwart von Ammoniak oder Stickoxiden in dem Abgas zu erfassen;
- die Erfassungsvorrichtung (1) an einem Luftzuführrohr (102) stromaufwärts der Maschine (104) und stromabwärts eines Luftfilters (101) angebracht ist; und
- eine Steuereinheit (109) dazu eingerichtet ist, die Menge eines Flüssigkeitsreduziermittels, das in das Abgas stromaufwärts der Katalysatorvorrichtung (106) eingespritzt wird, auf der Basis von Erfassungen, die von der Erfassungsvorrichtung (1) wenigstens durch die Feuchtigkeitssensoreinrichtung (32) ausgeführt werden, und Erfassungen einzustellen, die von dem Sensor (112) des Aufbereitungssystems ausgeführt werden;
wobei insbesondere Erfassungen, die von der Erfassungsvorrichtung (1) ausgeführt werden, verwendet werden, um einen kompensierten Wert der relativen Feuchtigkeit der Luft zu erhalten und/oder einen Zusetzungsgrad des Luftfilters (101) zu ermitteln.

## Revendications

1. Système de traitement de gaz d'échappement de type SCR ou destiné à réduire les émissions d'oxyde d'azote et/ou de particules d'un moteur à combustion interne, qui comprend :
- un catalyseur (106) placé le long d'un conduit (105) de gaz d'échappement du moteur (104), et un capteur (112) monté sur ledit conduit (105) en aval du catalyseur (106), afin de détecter la présence possible, dans les gaz d'échappement, de l'un d'ammoniac ou d'oxydes d'azote ;
- un dispositif de détection (1) muni d'un boîtier (2, 3) qui contient un circuit, qui comprend un capteur d'humidité (32), un capteur de température (33) et un capteur de pression (22), afin de mesurer une valeur d'humidité, une valeur de température et une valeur de pression d'un liquide, respectivement, le dispositif de détection (1) étant monté sur un conduit d'alimentation en air (102) en amont du moteur (104) et en aval d'un filtre à air (101) du moteur (104) ;
- une unité de commande (109) prévue pour régler la quantité d'agent réducteur liquide injectée dans les gaz d'échappement du moteur en amont du catalyseur (106) sur la base des détections effectuées par le dispositif de détection (1) au moins par le biais dudit capteur d'humidité (32), et des détections effectuées par ledit capteur (112).

2. Système de traitement de gaz d'échappement selon la revendication 1, dans lequel le capteur de pression (22) est contenu dans une première chambre (8) du boîtier (2, 3), tandis que le capteur d'humidité (32) et le capteur de température (33) sont placés dans une seconde chambre (10b) du boîtier (2, 3).

3. Système de traitement de gaz d'échappement selon la revendication 2, dans lequel la seconde chambre (10b) est définie dans un premier corps (2) du boîtier (2, 3) ayant au moins un premier passage (11) qui place la seconde chambre (10b) en communication avec l'environnement extérieur, et dans lequel le dispositif de détection (1) comprend un moyen de protection (80), prédisposé pour protéger le premier passage (11), le moyen de protection (80) comprenant de préférence un élément de protection (83) configuré pour dévier la trajectoire de particules solides ou liquides, l'élément de protection (83) étant en particulier opérationnel sensiblement en face du premier passage (11) et espacé de celui-ci.

4. Système de traitement de gaz d'échappement selon l'une quelconque des revendications précédentes, dans lequel, dans un premier corps (2) du boîtier (2, 3), sont définies une première et une seconde chambres (8, 10b), le premier corps (2) ayant un premier passage (11) qui place la seconde chambre (10b) en communication avec l'environnement extérieur et un second passage (9) qui place la première chambre (8) en communication avec l'environnement extérieur, le premier passage (11) ayant une entrée formée dans le premier corps (2) à un emplacement qui est espacé d'une entrée du second passage (9), le premier passage (11) communiquant uniquement avec le seconde chambre (10b) et le second passage (9) communiquant uniquement avec la première chambre (8).

5. Système de traitement de gaz d'échappement selon l'une quelconque des revendications précédentes, dans lequel le circuit comprend au moins un support de circuit (21, 31) ayant une fente (35), et au moins l'un du capteur d'humidité (32) et du capteur de température (33) est monté en bridge sur la fente (35).

6. Système de traitement de gaz d'échappement selon l'une quelconque des revendications 2 à 5, dans lequel le capteur de pression (22) est monté sur un premier support de circuit (21) contenu dans la première chambre (8), le capteur d'humidité (32) et le capteur de température (33) sont montés sur un second support de circuit (31) contenu dans la seconde chambre (10b), le premier et le second supports de circuit (21, 31) étant reliés par le biais de bornes d'interconnexion (40), et plus particulièrement de bornes d'interconnexion sensiblement rigides.

7. Système de traitement de gaz d'échappement selon la revendication 6, dans lequel le premier et le second supports de circuit (21, 31) sont positionnés dans la première et la seconde chambres (8, 10b) selon des plans respectifs qui sont sensiblement orthogonaux, la première et la seconde chambres (8, 10b) étant isolées l'une de l'autre par un joint (50) qui est traversé dans une direction axiale par une partie intermédiaire des bornes d'interconnexion (40).

8. Système de traitement de gaz d'échappement selon les revendications 3 et 5 ou 4 et 5, dans lequel le premier passage (11) comprend une première ouverture et une seconde ouverture (11) qui sont sensiblement coaxiales et formées dans le premier corps (2) au niveau des parois opposées de la seconde chambre (10b), une zone dudit support de circuit (31) dans laquelle la fente (35) est formée s'étendant entre la première et la seconde ouvertures.

9. Système de traitement de gaz d'échappement selon la revendication 7, dans lequel, entre le joint (50) et le premier support de circuit (21) est placé un élément d'espacement (60) qui possède un corps traversé dans une direction axiale par une partie respective des bornes d'interconnexion (40), l'élément d'espacement étant fixé sur le premier support de circuit (21).

10. Système de traitement de gaz d'échappement selon la revendication 6, dans lequel le premier support de circuit (21) possède un trou traversant (26), le capteur de pression (22) étant monté sur une première face du premier support de circuit (21) au niveau dudit trou traversant (26), et, sur ladite face dudit premier support de circuit (21) étant fixé un corps de protection tubulaire (27), qui entoure le capteur de pression (22), le corps de protection (27) contenant de préférence un matériau de protection du capteur de pression (22), comme un gel, le boîtier (2, 3) comprenant plus particulièrement un corps de fermeture (3) de la première chambre (8) qui possède, sur une face tournée vers l'intérieur de la première chambre (8), un élément tubulaire en saillie (73) dans lequel le corps de protection (27) est au moins partiellement inséré, entre l'élément tubulaire (73) et le corps de protection étant placé un joint (28), le corps de fermeture ayant de préférence un trou traversant (3a) au niveau dudit élément tubulaire (73).

11. Système de traitement de gaz d'échappement selon la revendication 3 ou 4, dans lequel
- au moins l'un dudit passage (9, 11) possède, à une extrémité de celui-ci, une membrane perméable à l'air et imperméable à l'eau (70, 71), et/ou
- le boîtier (2, 3) possède une partie de liaison intermédiaire (5), qui s'étend sous la première chambre (8), la partie de liaison intermédiaire (5) étant traversée par le second passage (9) et une cavité (10) qui définit la seconde chambre (10b), plus particulièrement de manière sensiblement parallèle l'un à l'autre.

12. Système de traitement de gaz d'échappement selon l'une quelconque des revendications précédentes, dans lequel le boîtier (2, 3) comprend un corps de fermeture (3) de la première chambre (8) qui possède un trou traversant (3a) au niveau duquel une membrane perméable à l'air et imperméable à l'eau (74) est montée.

13. Système de traitement de gaz d'échappement selon la revendication 1, qui possède en outre un connecteur (CE) qui comprend des bornes de connexion (12) ayant chacune une première partie (12a) qui s'étend dans la première chambre (8) et une seconde partie (12c) qui s'étend à l'extérieur de la première chambre (8), la première partie (12a) de chaque borne (12) définissant au moins une surface de repos (12a') à partir de laquelle part une extrémité terminale (12a) ayant une section transversale restreinte, et ayant plus particulièrement une forme généralement évasée, ladite extrémité terminale s'étendant axialement selon une direction qui est au moins approximativement perpendiculaire au plan du premier support de circuit (21), les extrémités terminales (12a) étant insérées dans des trous respectifs (24) présents dans une première zone du premier support de circuit (21), le premier support de circuit reposant sur les surfaces de repos (12a'), et le boîtier (2, 3) définissant, dans la première chambre (8), un moyen de positionnement (4b) destiné au premier support de circuit (20) au niveau d'une seconde zone de celui-ci.

14. Utilisation d'un dispositif de détection dans un système de traitement de gaz d'échappement de type SCR ou destiné à réduire les émissions d'oxyde d'azote et/ou de particules d'un moteur à combustion interne, dans laquelle
- le dispositif de détection possède un boîtier (2, 3) qui contient un circuit qui comprend un capteur d'humidité (32), un capteur de température (33) et un capteur de pression (22), afin de mesurer une valeur d'humidité, une valeur de température et une valeur de pression d'un liquide, respectivement ;
- le système de traitement comprend un catalyseur (106), placé le long d'un conduit (105) de gaz d'échappement du moteur (104), et un capteur (112) monté sur ledit conduit (105) en aval du catalyseur (106), afin de détecter la présence possible, dans les gaz d'échappement, de l'un d'ammoniac ou d'oxydes d'azote ;
- le dispositif de détection (1) est monté sur un conduit d'alimentation en air (102) en amont du moteur (104) et en aval d'un filtre à air (101) ;
- une unité de commande (109) est prévue pour régler la quantité d'agent réducteur liquide injectée dans les gaz d'échappement du moteur en amont du catalyseur (106) sur la base des détections effectuées par le dispositif de détection (1) au moins par le biais dudit capteur d'humidité (32), et des détections effectuées par ledit capteur (112) du système de traitement ;
dans laquelle, plus particulièrement, les détections effectuées par le dispositif de détection (1) sont utilisées pour obtenir une valeur compensée d'humidité relative de l'air et/ou pour déduire un degré de colmatage du filtre à air (101) .
